Europäisches Patentamt

European Patent Office

Office européen des brevets

(11) Publication number: **0 624 848 A2**

# EUROPEAN PATENT APPLICATION

(21) Application number: **94106449.5**

(22) Date of filing: **25.04.94**

(51) Int. Cl.5: **G06F 15/68**

(30) Priority: **04.05.93 US 57942**

(43) Date of publication of application:
**17.11.94 Bulletin 94/46**

(84) Designated Contracting States:
**DE FR GB**

(71) Applicant: **EASTMAN KODAK COMPANY**
**343 State Street**
**Rochester New York 14650-2201 (US)**

(72) Inventor: **Gray, Robert T., c/o Eastman Kodak**
**Company**
**Patent Legal Staff,**
**343 State Street**
**Rochester, New York 14650-2201 (US)**

(74) Representative: **Wagner, Karl H. et al**
**WAGNER & GEYER**
**Patentanwälte**
**Gewürzmühlstrasse 5**
**D-80538 München (DE)**

(54) **A technique for the detection and removal of local defects in digital continuous-tone images.**

(57) The present invention is a method for automatically detecting and correcting a wide range of local digital image defects with minimal user intervention. The detection process employs brightness and color thresholds in conjunction with magnitude thresholds on residuals of nonlinear spatial filters to separate defects from scene content with minimal confusion. The detected defects are then cosmetically corrected by combinations of nonlinear smoothing and grey-scale erosion. Several options are outlined for the feature selection, detection, and cleaning operations depending on source type and computational constraints.

FIG. 2

## Cross-reference to Related Applications

The present application is related to U. S. Patent Application Serial No. 07/934,089 entitled "Process for Detecting and Mapping Dirt on The Surface of a Photographic Element" filed 08/21/92 by Robert Gray et al., corres. to EP 0 585 759 A1.

## Field of the Invention

The present invention is related to the field of scanning images, primarily from photographic film, to form electrical equivalents of the scanned images and more particularly to the detection and the removal of defects due, for example, to dirt contamination or physical damage of the film.

A portion of the disclosure of this patent document contains material which is subject to copyright protection. The copyright owner has no objection to the facsimile reproduction by any one of the patent disclosure, as it appears in the Patent and Trademark Office patent files or records, but otherwise reserves all copyright rights whatsoever.

## Background of the Invention

Digital images created from electronic scanning of continuous-tone photographic film often reveal visually objectionable defects due to dirt contamination or surface damage of the film. These defects usually must be digitally corrected by manual digital retouching (e.g. via "dustbusting" and other cloning techniques), which require that the operator visually identify each local defect in the image.

A patent of interest for its teaching in this art is U.S. Patent No. 4,189,235. entitled "Test Device For Dynamically Measuring The Degree of Dirt Accumulation On Bank-Notes" by Guter et al. That patent describes a method for inspecting opaque web materials for dirt accumulation. A reflected signal from the web material is sensed by three adjacent photosensors as the material moves past the sensors. When the signal sensed by the center sensor is significantly different than from that sensed by the side sensors the sensed area is classified as containing dirt.

In conventional optical printing systems, if dirt or a scratch appears on the photographic image, the photographic negative or slide may be cleaned and the print remade or the print itself may be retouched. In the case where the images are written to an optical disc, it is not convenient nor desirable to rewrite the image, because many images are written onto a disc before the images are viewed, and once an image is written it cannot be removed. Therefore, it is desirable to monitor the dirt present in photofinishing environments and to assess the effectiveness of any selected film cleaning methods.

In U.S. Patent No. 4,907,156, entitled "Method and System for Enhancement and Detection of Abnormal Anatomic Regions in a Digital Image" by K. Doi et al. there is disclosed a technique for taking the difference between an "enhanced" and a "degraded" version of the input image to identify and remove structured anatomic background. A series of single thresholds are then applied to the difference images using the shape/size behavior of image regions to perform a feature extraction that is related to the detection of lung nodules. The feature extraction is implemented by the use of thresholds against which difference image pixels are compared to identify which super threshold "blobs" are lung nodules and which are not.

A significant problem in the detection of dust is to provide an adequate way of detecting "small" objects. There are several possible approaches to this problem. For example, one could color-classify all the color pixels in an image, then spatially connect the pixels of a common color-class into segments, and then examine the spatial dimensions of the segment. This approach, while possible, has the drawback that the color classification must be quite accurate, or else some marginally-colored pixels will be misclassified. The problem is that differences in the direct RGB (or luminance-chrominance) image values do not alone give much contrast information between, say, a white small dust artifact and a bright grey extended scene region on which the artifact is superimposed. Thus after color-classification one may be left with very large segments that are reasonably neutral and bright, but which now mask visible dust artifacts.

A better approach prior to classification is to preselect only those points which have large local contrast from their surround. This may be directly accomplished by (1) spatially smoothing the color image and (2) subtracting the smoothed color image from the original color image. The resulting difference (or "residuals") image will emphasize all color pixels which have a large magnitude compared to some weighted local average magnitude. The key decision here is then the choice of spatial smoother. The most obvious first candidate is a low-pass linear filter (e.g. a simple spatially weighted averaging of all grey levels (GLs) in a local window); the properties may be easily analyzed mathematically, and (perhaps more important) such filters may be rapidly implemented in software and hardware (the residual image is basically a high-pass-filtered version of the original). Unfortunately, linear residuals images have the property of retaining all local edges in an image, including very long edges due to scene discontinuities. The result is a very "cluttered" image (i.e. the residuals image contains many bright pixels having no connection with dirt or scratches); a significant amount of additional time must then be spent in scene reasoning to clean up the residuals map before defect decisions can be made. In short, linear-filter residuals poorly discriminate between local defects and true scene details.

The identification of anomalies such as dust or scratches leads to the desirability of removing the same without the intervention of an operator. The present invention is directed to a methodology for identifying and cosmetically correcting such anomalies with minimal operator intervention.

## Summary of The Invention

One of the preferred methods of the present invention is: A method for the detection and removal of defects in digital images comprising the steps of:

a) preprocessing a digital image represented by pixel values to form a feature image in which defect pixels have large local contrast from their neighboring non-defect pixels;

b) testing the value of each feature image pixel value to determine if the value is within a range of pixel values expected of defects;

c) edge-preserving spatial filtering of each of the feature image pixel values that are within the range of expected defects;

d) forming a residual value for each pixel as a function of the difference between the corresponding feature image pixel value and the filtered value of step c);

e) testing each residual value of step d) to determine if the residual value is within a range of residuals values expected of defects;

f) forming a map in which each pixel that is within the range of expected defects according to steps b) and e) is marked as a defect; and

g) correcting the digital image using the map created in step f).

The present method, is called an autodustbuster (ADB) algorithm, and it has been successfully tested on both consumer-type color photographic images and color motion picture frames with good results.

From the above it can be seen that it is a primary object of the present invention to provide an automatic local defect detection and removal technique for digital images.

The above and other objects of the present invention will become more apparent when taken in conjunction with the following description and drawings wherein like characters indicate like parts and which drawings form a part of the present invention.

## Brief Description of The Drawings

Figure 1 illustrates a system on which the present invention may be implemented.

Figure 2 illustrates the windowing of an image raster to determine the grey level of a central pixel GLc at a position X.

Figure 3 illustrates in chart form a histogram of GL values for an associated window.

Figure 4 illustrates the averaging of the samples "nearest" in grey level GL to the central pixel GLc for the histogram of Figure 3.

Figure 5 illustrates the replacement of the GLc value with the grey level average $GL_{av}$ at the position X.

Figure 6 illustrates the process flow for a multi-band original image.

Figure 7 illustrates the process flow for a resolution pyramid of an image.

Figure 8 illustrates the process flow as applied to an R, G, B image.

Figure 9 illustrates a flow for ADB processing within a resolution pyramid.

## Detailed Description of the Invention

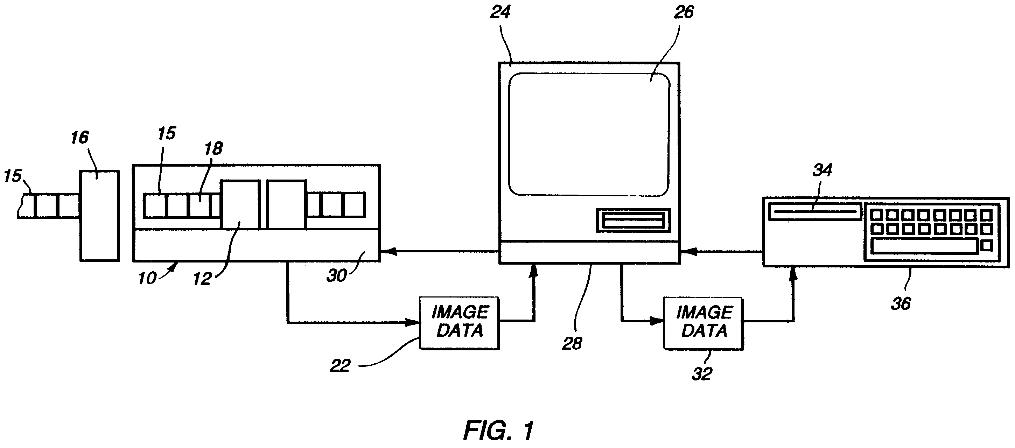

Referring to Figure 1, the present invention is implemented using a digitizing scanner 10, a control and logic device 24, such as a computer with a display device 26, and an optical disc writer 36. As shown, a strip of film 15, containing one or more frames 18 of developed film, is placed into a scan gate 12 where the strip of film 15 is scanned under direction of control and logic circuitry 30. As each frame 18 is scanned the resultant scanned image data, represented by block 22, is digitized and transmitted to a memory 28 for storage. The computer 24 process the stored data, in a manner to be described, to provide output image data 32 which may be written to an optical disc 34 by the optical disc writer 36 to provide a report as to the characteristics of the anomalies. The scanning device 10 is capable of quantizing pixel values into multiple brightness levels in separate red, green, and blue channels. A minimum number of brightness levels would be approximately 64 for an adequate quality image with a typical number being 256. Although the image data 22 has been described as originating from the operation of scanning film, it is well understood that other well-known techniques may be used to provide the image data.

The autodustbuster (ADB) algorithm and several processing options that allow customization for different source types and computational constraints will now be described.

The required ADB operations may be divided into (1) feature selection, (2) defect detection, and (3) defect correction. The operations must ensure that the maximum number of defects is detected and optimally corrected while minimally affecting scene elements which are not defects. Thus, the more confidence which the user has in the accuracy of the detection process, the more extreme can be the removal process; conversely, as one's confidence in avoiding "false alarms" from scene elements diminishes, milder removal methods may be used to avoid damaging real scene elements.

Visible dirt artifacts in digital positives, created from scanned color negatives, possesses the following properties: they are "white" (low color saturation), "bright" (very high apparent exposure values), "small" (small spatial extent) and "contrast" (large differences from their immediate surround). (If dirty color positives were instead scanned, then the dirt artifacts would be "dark" rather than "bright"). In addition, many such fragments exhibit little brightness variation within individual defects.

It is obvious that the above characteristics are rather loosely defined, and that many real scene characteristics may possess one or more of these attributes, Thus the goals of an ADB algorithm are to maximize the percentage of defects detected ("hits") while minimizing the number of real scene elements mistakenly considered to be defects ("false alarms"). These goals tend to be competitive, that is, setting thresholds on features to increase the percentage of "hits" tends to increase the number of "false alarms" and vice versa. A detection mechanism must be used in which defects appear as dissimilar as possible from true scene elements.

In most imagery, spatially small objects which differ greatly in brightness or color from the immediate surround are relatively rare. The ADB algorithm exploits this property by the innovative use of a particular form of nonlinear spatial filter. The properties of this filter are described in the next section.

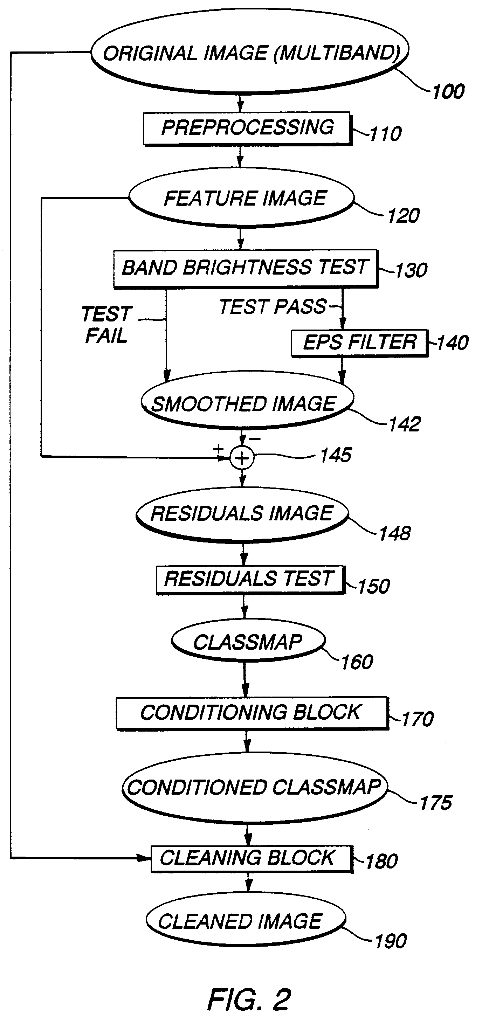

Figure 2, illustrates in flow chart form the generic autodustbuster process flow. The original image of block 100 is a multi-band digital image represented by one or more matrices of pixel values or equivalently grey levels (GL). In preprocessing block 110 some effective and convenient remapping of the original image may be performed. An example of preprocessing is the digital resampling of the image to reduce its size for computational expediency. An alternate preprocessing is the selection or recombination of the original image bands to produce a feature image with fewer bands. The detection suitability of the resulting feature image, in any case, should be at least comparable to that of the original image. Oval 120 represents the feature image that is outputted from block 110. The feature image is subjected to a band brightness test in block 130. The test applies low and high threshold evaluations to every pixel of each band in the feature image. Pixel values that are above the high threshold or below the low threshold in each band are considered to have passed the test and are forwarded to an edge-preserving-smoothing (EPS) filter 140. This filter non-linearly smoothes the selected pixel in all bands in a manner that retains major scene edges as subsequently described. The output of the filter at this pixel position is written to a corresponding position in the smoothed image 142. For those pixel values that are below the high threshold value, but above the low threshold value no subsequent EPS filtering is applied, i.e. the test is considered failed. Each band of the feature image pixel is copied to the resultant output of the smoothed image 142 and does not undergo EPS filtering. At difference node 145 the pixel values of each band of the smoothed image are subtracted from the pixel values at the corresponding position in the feature image 120 resulting in the residuals image 148.

All of the pixel values from the residuals image are subjected to the residuals test of block 150. The residuals test consists of a minimum and a maximum threshold that is applied to each band of the residuals image 148. When bright defects are to be detected, for a pixel to pass all band values must exceed the minimum threshold and at least one band value must exceed the maximum threshold. When a dark defect is to be detected a pixel will pass if all band values are less than the maximum threshold and at least one band value is less than the minimum threshold.

Pixels that pass are forwarded to a classmap 160 and marked with a distinctive value. The classmap 160 is a single band image representation which is used to mark the location of detected defects. Pixels that fail are marked with a different value in the classmap 160. In a classmap conditioning block 170 the values within the classmap 160 may be further modified to accommodate known spatial characteristics of the defects. For example, a one-pixel morphological dilation of the defect-marked (passed) pixels in the classmap is typically performed. The conditioned classmap 175 is directed to the cleaning block 180 long with the original image pixel values. Pixels in the original image that are not marked as passed in the classmap will be copied unchanged to the output cleaned image 190. Pixels which are marked as passed, i.e., defect, are corrected using neighboring non-defect pixel values. The corrected values are then written to the cleaned image 190.

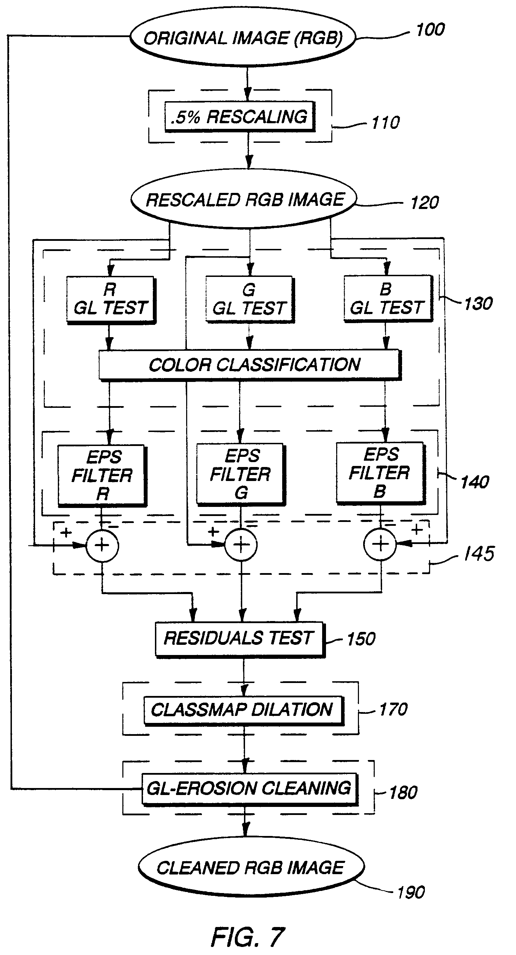

A more detailed discussion of the major blocks of Figure 2 will now be undertaken. In ADB processing the feature image 120 used to detect the defect locations may be different from the original image 100 which will be corrected. This is generally advantageous when computational time is at a premium and EPS filtering 140 of the full (generally three-color) image is too burdensome. In this case it is often possible to apply a preprocessing module 110 to create a one- or two-band "feature" image 120 which instead will be EPS-filtered and classified for defects. The effectiveness of this strategy will depend on the success with which a reduced-dimensionality feature image will retain the size, brightness, contrast, and color defect discrimination of the original image 100. This will of course be application-specific. For example, in digitized imagery originating from superimposed color cells (as in animated motion pictures) defects may be of any color and saturation; thus little is lost in detection performance using a reduced-dimension space which sacrifices color and saturation information. In this case good success has been achieved in using a "band-maximum" one-band feature image 120 band where every feature pixel value is the maximum value of the input red, green, and blue bands. By contrast, in Photo CD applications the principle source of defects is dirt on the negative during scanning, which appears as "white" specks in the digital positive; here saturation information should be retained as an important identifier, and two- or three-band EPS-filtered feature images are the norm. Figure 7 illustrates the retention of all three color original color bands for classification.

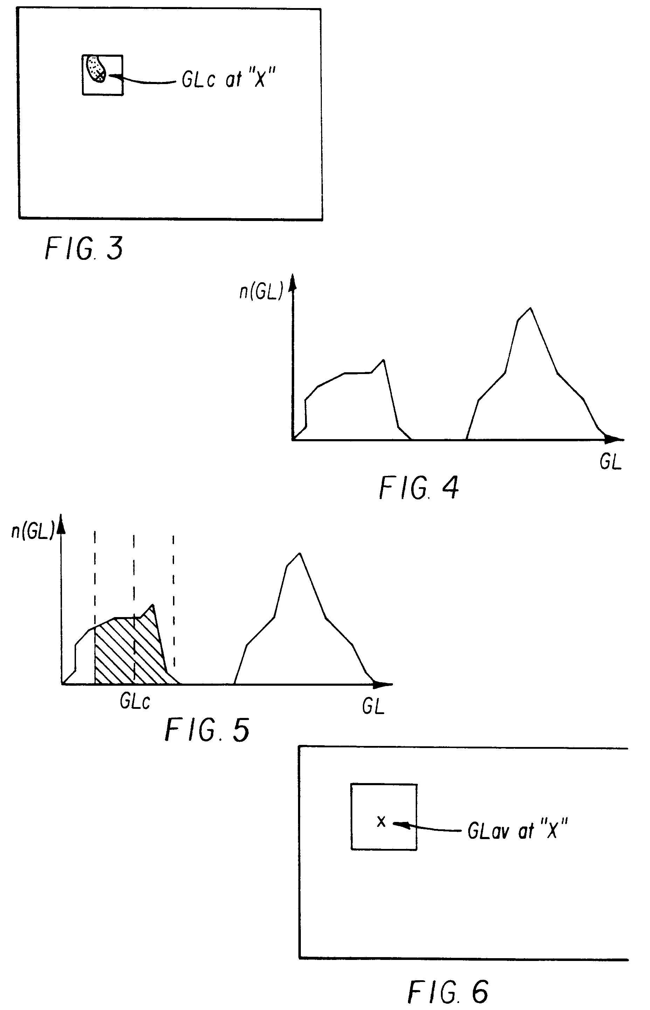

Rescaling of the feature image grey-level range during preprocessing 110 is often advantageous. In current implementations this consists of linearly scaling to a 0-255 pixel value range even for 10- or 12-bit original data. This results in a slight speed improvement during EPS-filtering 140 when the histogram is searched at every window location (see Figures 4 and 5 along with associated discussions). In Photo CD applications (e.g. Figure 7 this rescaling may be determined by finding .5% and 99.5% cumulative histogram points of the color-corrected bands of the entire input image. The minimum .5%-point and maximum 99.5%-point from among all bands are mapped to 0 and 255 pixel values, respectively in the feature image, thus ensuring that no color shift occurs. If the input data is not color balanced it may be necessary to perform a color balancing step on the original data.

**EPS Filters and k-Nearest Neighbor (kNN)**

To detect the critical size of the desired defects a smoothing filter is desired which retains extended image edges but smoothes small local contrasty image regions (blobs). Such filters exist as various nonlinear noise-reduction methods under the category of "edge-preserving smoothers" (EPS). The most widely known EPS filter is the median filter, which is one member of the class of rank-order filters. In rank-order filters, the pixel magnitudes are sorted and an average of some contiguous number of the sorted magnitudes is computed. For example, in a median filter the "middle" element of the sorted magnitudes is retained (an average over one sample). The sample mean is, at the other extreme, also a rank-order filter (although a poor EPS); it provides the average of all sorted magnitude values.

A poor property of standard rank-order filters for image operations is that they are insensitive to the relative spatial location of the pixels within the current window; e.g. the magnitude chosen as the "median" may exist at the center of the window or at an extreme edge of the window. A number of specialized nonlinear window operators have-been devised to account for local spatial structure. One example is the sigma filter (J.-S. Lee, CVGIP,24,255-269. 1983). In this filter a histogram is created of the grey levels in a sliding window; based upon an estimate of the image noise, a range of histogram values about the grey level of the pixel at the center of the window is computed. One characteristic of the sigma filter, however, is that it is specifically designed for noise removal and its averaging range is solely dependent on the noise characteristics; the filter averages over a different number of pixels at each window location. For "blob" detection, however, what is desired is a filter whose parameters are sensitive to local shape characteristics.

A relative of the sigma filter which gives this control is the k-nearest-neighbor (kNN) filter (Davis and Rosenfeld, IEEE Trans, SMC, 7, 107-109 ,1978). This filter is implemented in the EPS filter module 140 of Figure 2. This filter has the following operation per color band:

Referring to Figure 3, slide a rectangular window of odd dimensions n x m over an image in raster order. At each location determine the grey level of the center pixel ($GL_c$) or equivalently pixel value, and also create a histogram of the grey levels in the local window as per Figure 4. Beginning at the histogram bin containing the center grey level $GL_c$, sum contents of the histogram bins on both sides of the starting bin in the following fashion: Test if the contents in the bin for $GL_c$ are greater than or equal to k pixels. If this is true, then write out as the averaged value $GL_{av}$ just the existing value $GL_c$. If the contents for bin $GL_c$ are less than k, then add the contents of the bin immediately below the bin and above $GL_c$ to the sum and, again test whether the sum is greater than or equal to k. If the sum equals k, then calculate the average grey level according to the formula

$$GL_{av} = \frac{SUM \{GL_i \times hist_{(i)}\}}{SUM \{hist_{(i)}\}}$$

where the index i is over the summed histogram bins. If the sum is greater than k, then the extreme bins in the sum are proportionally reduced in weight in the calculation for $GL_{av}$ so that the total bin weight in the sum approximately equals k (as shown in the attached source code). If the sum is less than k, then the next bin below $GL_c$ and above $GL_c$ are summmed and tested against k. This process is repeated until the sum of histogram bins about $GL_c$ are greater than or equal to k. Continue until k pixels (k < n x m) have been summed. Find the average grey level of the summed pixels per Figure 5 and write this value to an output image at the location of the window center per Figure 6.

The k-nearest neighbor filter has some interesting filtering properties which are not immediately obvious from the above description. First, any constant-GL image structure (blob) which has an area of k or more pixels in the local window will not be significantly smoothed; any structure of less than k pixels will be increasingly smoothed as k decreases. Second, at "ramp" edges between otherwise constant grey level regions the slope of the ramp will be increased (sharpened) by the filter.

The first property is the one of significance for "blob" detection. For example, if the window size is 5 x 5 pixels, and if k is, say, 15, then extended straight edges having a depth (constant pixel value in both directions perpendicular to the edge) greater than three pixels will be effectively unchanged, and thus disappear in a residuals image. "Blobs" of area less than 15 pixels that fit entirely in the window will be smoothed and thus will appear strongly in the residuals image. This is the desired residuals property for a local defect detector.

A major concern for a k-nearest neighbor filtering is computational speed. This is not a linear filter and it is not separable, nor does it have other usable symmetry properties. The major operations per window location are histogram creation and then accumulation with testing of the total accumulated samples. The current k-nearest neighbor implementation does significantly reduce the cost of computing the histogram by merely updating the window histogram in a horizontal strip of image rather than performing complete calculations per window. This results in a fractional saving of approximately (n-2)/n in histogram-computing operations (for a n pixel x m line window), i.e. the savings increase as window length increases. (This fast histogram updating is equivalent to that used in the "fast-median" filter--Huang and Tang, IEEE Trans, ASSP, 27, 13-18, 1979).

Residuals Test

As mentioned above, a residuals image 148 is created as shown in Figure 2. The anomaly classifier steps contained in modules 150 and 170 accept as input the residuals image 148 and create as output the final classmap 175 which marks the pixels to be cleaned.

The residuals test in module 150 creates an initial classmap by performing tests on each pixel of the residuals image 148. In the classmap conditioning module 170 a spatial segmentation (i.e. connected-component labeling) of the non-background pixels in the classmap may be optionally performed with additional tests applied to the same segment.

In the simplest (single-state) version and for detecting bright defects, each color residual pixel is evaluated against two residual-GL thresholds, $GL_{rmin}$ and $GL_{rmax}$. In this implementation, all color residual pixels whose minimum band residual GL exceeds $GL_{rmin}$ andwhose maximum band residual GL exceeds $GL_{rmax}$ are uniquely marked for subsequent cleaning; pixels which do not satisfy both of these constraints are marked to be left unaltered in the output image. (For single-band feature images $GL_{rmin}$ equals $GL_{rmax}$). The two-dimensional map of category markings per pixel is termed the "class map". These thresholds impose a minimum required contrast between a defect pixel and its immediate background. The (smaller)

$GL_{rmin}$ threshold is generally set slightly above the "zero point" in the residuals image (e.g. to 133 for rescaled features with residuals biased by a value of 128 as described above) and acknowledges that valid bright defect pixels , e.g. due to dirt on a scanned negative, should not have a negative contrast (residual values less than the zero point) in any band. The (larger) $GL_{rmax}$ threshold states a requirement of significant local contrast in at least one band for the defect to be visible. (Recalling that these thresholds are on the residuals GLs, it is obvious that not all bands should be required to pass a large $GL_{rmax}$ value; for example, a white dirt artifact against a bright red background would have large residual values in the green and blue bands, but only a small residual value in the red band.)

For two-state anomaly classification, two sets of residuals thresholds are used, i.e. $GL_{rmin1}$, $GL_{rmax1}$, $GL_{rmin2}$, and $GL_{rmax2}$. In general, the minimum-residuals thresholds are set equally, and slightly above the zero point as mentioned above; the maximum-residuals threshold is set somewhat higher for labeling high-confidence pixels than is the maximum-residuals threshold for the low-confidence pixels. This labeling results in a class map where the pixels possess one of three labels (normal, low-confidence dirt, and high-confidence dirt). In two-state classification, this class map undergoes image segmentation in module 170, i.e. all residuals pixels spatially contiguous in the class map which have the same class are, assigned a unique code value. (These code values can be thought of as uniquely labeling all the "blobs" of suspected defects in the image.) A fairly efficient algorithm for segmenting the class map is employed which involves finding the lowest prototype code value in a spatial "tree" of prototype segments of the same class, and then renaming all the segments in the tree with this lowest code value.

Following segmentation, all segments which contain low-confidence defect pixels and which are spatially touching segments containing high-confidence pixels are upgraded to high-confidence (i.e. the class map values of the pixels are reassigned to the "high confidence of an defect" class). The purpose of this step is to make use of the adjacent presence of very obvious defects to decide that a slightly less contrasty region is part of the same defect. The segments which remain at low confidence are either relabeled as "clean" (i.e. all pixels of the segment are marked for no cleaning in the classmap) or else name their pixels marked for subsequent cleaning state in module 180. The segments, which are marked as high confidence of being defects, have their pixels marked in the classmap for subsequent erosion cleaning in module 180.

## Cleaning

Two general cleaning methods are presently available for use within module 180 in the ADB algorithms: EPS substitution and greyscale erosion. In simple EPS substitution, the original input multi-band grey levels of image 100 are simply replaced by the band EPS-filtered grey levels of smoothed image 142 wherever a pixel is marked as a defect in the classmap 175 (as shown in Figure 2). This method has the advantage of computational simplicity in that EPS values have already been computed during defect detection; however it requires that the EPS image be stored for use during cleaning. In addition, EPS substitution is relatively forgiving of "false alarms", i.e. pixels classified as dirt artifacts but which are really part of the scene. Conversely, EPS-substitution cleaning may not completely remove all of an extended defect, to the degree that the defect itself influenced the local EPS values.

In the greyscale erosion cleaning option, an iterative process occurs over detected defect regions, whereby GLs of defect pixels are replaced by a weighted average of original GLs of "normal" (i.e. non-defect or corrected defect) pixels within a small distance of the defect pixel. As the iterations progress, the effect of the "normal" GLs propagates toward the center of the original extended defect. The iterations end when all marked defect pixels have been replaced. Two precautions are in order. First, the "normal"-labeled pixels that are in immediate contact with the defect pixels at the beginning of the iterations are also relabeled to class "defect" prior to the onset of cleaning (via a morphological dilation operation which uses a 3x3-pixel probe function). This is because such pixels, while failing the detection thresholds, often have some contribution from the defect in their GLs which will be visible when propagated over multiple pixels during erosion. Cleaning their values as well as those of "true" defect pixels can significantly improve the quality of the cleaning. The second precaution is that the spatial window over which the erosion weights are taken should be kept reasonably small, e.g. 5 x 5 samples. The reason for this is to minimize the influence of distant pixels which may not be part of the same scene structure as the region obscured by the central defect pixel.

Current practice for the erosion cleaner is to use a 5x5-pixel sliding window with a minimum of six clean-class contained pixels in order for a central defect-class pixel to be filtered; if the central pixel is defect-class, but fewer than six clean samples are contained, then the defect classification is maintained to the next iteration. If the central pixel is of defect class and six or more clean-class samples are contained in the window, then the GLs of the central pixel are replaced by a weighted average of the band GLs of the contained clean pixels, where the weights are linearly proportional to the inverse of the Euclidean spatial distance of the clean pixel from the central pixel. The cleaning is iterative (multiple passes through the class map) but is not recursive, i.e. the cleaning effect at one window location does not affect the cleaning at subsequent locations during the same iteration, in order to avoid directional biasing.

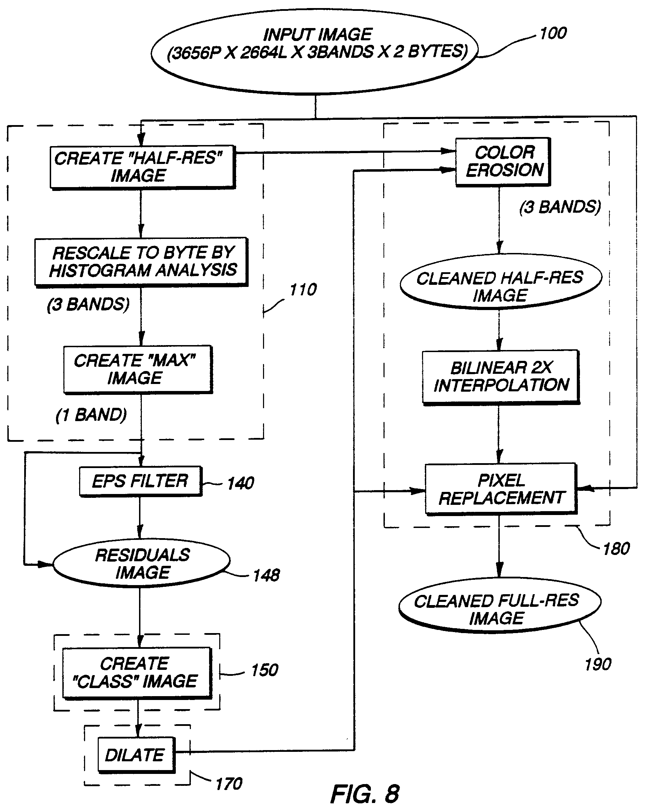

Greyscale erosion has the advantage over EPS-substitution in being able to completely eliminate all trace of the artifact from the image; its disadvantages are increased complexity, a variable processing rate (the number of iterations is not known a priori), and the possibility for severe scene damage in the case of "false alarms" (i.e., real scene elements may be removed from the image). Despite these concerns, the excellent cleaning performance of erosion is currently the preferred method in both Photo CD (Figure 7) and Cineon (Figure 8) applications.

### Alternative Implementations:

The ADB algorithm has several "flavors". These include (a) operation at a single spatial resolution, (b) operation within a resolution pyramid, (c) single-defect-state detection, (d) multiple-defect-state detection, and cleaning via (e) EPS substitution or (f) grey scale erosion. In the single-state versions, all pixels of the image are classified as either "non-defect" or "defect", i.e. only one defect state is treated. In multi-state versions, the "defect" classification is further divided into subclassifications depending on the confidence that a pixel is indeed a defect; thus a three-state classification would consist of "non-defect", "high-confidence defect", and "transition-confidence defect". In single-state versions the cleaner used is either EPS-substitution or grey-scale erosion, but not both in one implementation. The multi-state version may employ a combination of both EPS-substitution for cleaning the lower-confidence defect regions and grey-scale erosion for cleaning the higher-confidence defect regions.

The flavor combining options (a), (c), and (f) is a simple variant to implement, though it is not necessarily the fastest or best-performing version. In this case no spatial resolution pyramid is formed, the residuals image is not segmented, and the cleaner is chosen to be gray scale erosion for maximum correction. Figure 7 illustrates such a process flow and is typical of a Photo CD application. In this case the preprocessing 110 consists of rescaling the pixel values of the original image for maximum viewing contrast by linearly remapping the lowest .5-% band gray level to a value of zero and the highest 99.5% level to 255, as previously described in the description for Figure 2. The brightness test 130 for dirt on scanned negatives consists of minimum threshold pixel values which must be equaled or exceeded in each band of the feature image 120 in order for the corresponding pixel to pass the test as a possible defect. The residuals classification 150 is a single state decision per pixel as either a non-defect or defect class, based upon a requirement that the smallest band residual equal or exceed the zero-background residuals level and that the largest band residual equal or exceed some user-determined threshold level which is above the zero background level. The classmap conditioning 170 in this case consists of a morphological dilation of the defect pixels in the classmap using a 3 x 3 or 5 x 5 kernel. The cleaning 180 consists of greyscale erosion as previously described under the section called "cleaning."

Figure 8 illustrates an alternate processing flow which retains the characteristics, (a), (c) and (f), is appropriate for removal of bright defects in Cineon applications. In this case it is desirable to minimize the processing time required by the large image format the processing is therefor directed at only detecting the largest defects and at minimizing the number of bands in the feature image. The preprocessing 110 in this instance consists of creating a reduced resolution image rescaling it to a zero to 255 greylevel range such that the color balance is corrected, and then extracting a single band feature image in which the output pixel value is the larger of the Red, Green and Blue input values. The residuals test 150 applies a single threshold which each residuals pixel must equal or exceed to be marked as defect. Classmap conditioning 170 consists of morphological dilation as described above. The cleaning module 180 consists initially of performing greyscale erosion of the reduced resolution unrescaled input image as previously described. Next the cleaned reduced resolution multi-band image is bilinearly interpolated back to the original size and the conditioned classmap is replicated to the original image size. Finally those pixels in the original image which are marked "defect" in the replicated classmap are replaced by the pixel values in the interpolated cleaned reduced resolution image.

It is possible to use ADB within a multi-resolution pyramid structure to provide some speed gains from use of multiple smaller EPS kernels. This implementation would also allow more effective cleaning from the use of EPS residuals thresholds which are tuned to the specific pyramid level.

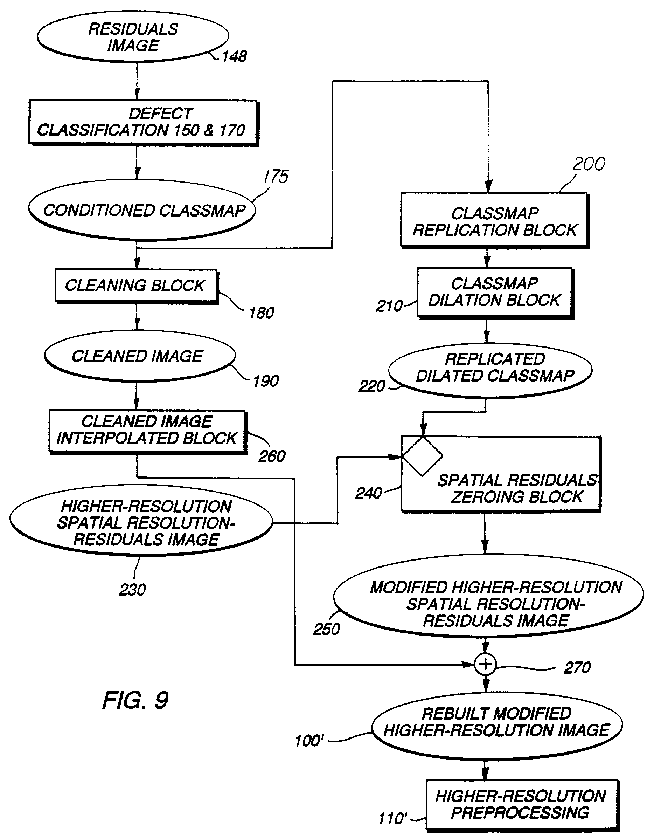

Figure 9 illustrates a flow for ADB processing within a resolution pyramid. In most respects, ADB cleaning within a spatial level is similar to that in a single-level ADB version, i.e. detection, classification, and cleaning occur, and choices of one- or two-state and of EPS-substitution and/or greyscale erosion are the same. One key difference lies in the way the spatial pyramid residuals images are processed.

In a spatial pyramid, an image is represented generally as a low-resolution image plus a number of residuals images of increasing resolution. To reconstruct the image to a particular resolution, one interpolates the low-resolution image by a prescribed method to the next resolution level and then adds the residuals values of that level to each pixel GL. This process continues until the desired resolution level has been reconstructed. The Photo CD file format is an example of a spatial pyramid structure. Note that these residual images are simply the pixel band difference between the original image at that resolution and the interpolated low-resolution version; they should not be confused with the EPS residual images discussed above.

In a pyramid structure, all higher-resolution reconstructed pixels depend on the lower-resolution GLs at that spatial location. Thus when some subset of defect pixels is cleaned at a given resolution level, the residuals values at all higher resolutions at these locations must also be adjusted; failure to correct the residuals' values could result in "ghost" images of the original defects upon pyramid reconstruction. Although various residuals processing schemes are possible, the method currently used for ADB is the following relatively simple one: the base (lowest level) version of the original image is cleaned as in Figure 7. The classmap 175 prior to base cleaning is then replicated in module 200 to the size of the next highest resolution level. The defect-class pixels in the replicated classmap are then dilated in module 210 by a spatial extent equal to the region of support of the pyramid smoothing function for that level, i.e., the halfwidth of the kernal used to create the next-lower-resolution level. The resulting dilated classmap 220 is then compared with the pyramid-residuals image 230; the pyramid residuals image is assigned a zero pixel value in every band wherever the corresponding pixel in the class map 220 is labeled as defect. The resulting modified pyramid-residuals image 250 is then added per-pixel in module 270 to a version of the base level cleaned image 190 which has been spatially interpolated to the present pyramid resolution level in module 260.

This results in a reassembled (base + 1)-level image 100' in which the results of the base-level ADB learning have been incorporated. This image is then ADB-processed starting with the preprocessing step 110', and the process of Figure 9 thus repeats until all levels have been reassembled and cleaned. Note that ADB cleaning may be omitted from higher-resolution levels at the expense of small defects not being corrected, but that all higher-level, pyramid-residuals must be zeroed as described in order to ensure that no defect "ghosts" will appear in the final image.

While there has been shown what are considered to be the preferred embodiments of the invention, it will be manifest that many changes and modifications may be made therein without departing from the essential spirit of the invention. It is intended, therefore, in the annexed claims, to cover all such changes and modifications as may fall within the true scope of the invention.

**Parts List**

| | |
|---|---|
| 10 | Scanner device |
| 12 | Scan gate |
| 15 | Film strip |
| 16 | Film cleaner |
| 18 | Frame |
| 22 | Image data |
| 24 | Control and logic device (computer) |
| 26 | Display device |
| 28 | Memory |
| 30 | Logic circuitry |
| 32 | Output image data |
| 34 | Optical disc |
| 36 | Disc writer |
| 100 | Original image |
| 110 | Preprocessing |
| 120 | Feature image |
| 130 | Band brightness test |
| 140 | Edge-preserving-smoothing (EPS) filter |
| 142 | Smoothed image |
| 145 | Difference or subtracting node |

148 Residual image
150 Residuals test
160 Classmap
170 Conditioning block
175 Conditioned classmap
180 Cleaning block
190 Cleaned image
200 Classmap replication block
210 Classmap dilation block
220 Replicated dilated classmap
230 Higher-resolution spatial resolution-residuals image
240 Spatial residuals zeroing block
250 Modified higher-resolution spatial resolution-residuals image
260 Cleaned-image interpolation block
270 Pixel value summing node
100' Rebuilt modified higher-resolution image
110' Higher-resolution preprocessing

The Invention may be summarized as follows:

1. A method for the detection and removal of defects in digital images comprising the steps of:
a) preprocessing a digital image represented by pixel values to form a feature image in which defect pixels have large local contrast from their neighboring non-defect pixels;
b) testing the value of each feature image pixel value to determine if the value is within a range of pixel values expected of defects;
c) edge-preserving spatial filtering of each of the feature image pixel values that are within the range of expected defects;
d) forming a residual value for each pixel as a function of the difference between the corresponding feature image pixel value and the filtered value of step c);
e) testing each residual value of step d) to determine if the residual value is within a range of residuals values expected of defects;
f) forming a map in which each pixel that is within the range of expected defects according to steps b) and e) is marked as a defect; and
g) correcting the digital image using the map created in step f).

2. A method for the detection and removal of defects in digital images comprising the steps of:
a) preprocessing a digital image represented by pixel values to form a feature image in which defect pixels have large local contrast from their neighboring non-defect pixels;
b) testing the value of each feature image pixel value to determine if the value is within a range of pixel values expected of defects;
c) edge-preserving spatial filtering of each of the feature image pixel values that are within the range of expected defects;
d) forming a residuals image which consists of the difference between the feature image pixel values and the filtered values of step c);
e) testing each pixel value of the residuals image of step d) to determine if the residual value is within a range of residuals values expected of defects;
f) forming a map in which each pixel that is within the range of expected defects according to steps b) and e) is marked as a defect; and
g) correcting the digital image using the map created in step f).

3. A method for the detection and removal of defects in digital images comprising the steps of:
a) preprocessing a digital image represented by pixel values to form a feature image in which defect pixels have large local contrast from their neighboring non-defect pixels;
b) testing the value of each feature image pixel value to determine if the value is within a range of pixel values expected of defects;
c) edge-preserving spatial filtering of each of the feature image pixel values;
d) forming a residual value for each pixel as a function of the difference between the corresponding feature image pixel value and the filtered value of step c);
e) testing each residual value of step d) to determine if the residual value is within a range of residuals values expected of defects;

10

f) forming a map in which each pixel that is within the range of expected defects according to steps b) and e) is marked as a defect; and

g) correcting the digital image using the map created in step f).

4. The method wherein the map formed in step f) is conditioned by morphological dilation of the pixels marked as defect.

5. The method wherein the map formed in step f) is conditioned by morphological erosion of the pixels not marked as defect.

6. The method wherein the map of step f) is formed with each pixel marked according to the magnitude of its values according to steps b) and e).

7. The method wherein the map formed in step f) is formed with each pixel marked according to the magnitude of its values according to steps b) and e)and is conditioned by morphological dilation of the pixels marked as defect.

8. The method wherein the map formed in step f) is formed with each pixel marked according to the magnitude of its values according to steps b) and e) and is conditioned by morphological erosion of the pixels not marked as defect.

9. The method wherein the filtering of step c) is performed with a k-nearest neighbor filter.

10. A method for the detection and removal of defects in digital images represented by multiple spatial resolutions ordered from lower to higher, comprising the steps of:

a) preprocessing a lower spatial resolution representation of the digital image by forming a feature image in which defect pixels have large local contrast from their neighboring non-defect pixels;

b) testing the value of each feature image pixel value to determine if the value is within a range of pixel values expected of defects;

c) edge-preserving spatial filtering of each of the feature image pixel values that are within the range of expected defects;

d) forming a residual value for each pixel as a function of the difference between the corresponding feature image pixel value and the filtered value of step c);

e) testing each residual value of step d) to determine if the residual value is within a range of residuals values expected of defects;

f) forming a map in which each pixel that is within the range of expected defects according to steps b) and e) is marked as a defect;

g) correcting the lower resolution representation of the digital image using the map created in step f); and

h) correcting the higher resolution representations of the digital image using the map created in step f).

11. The method wherein one or more of the higher resolution representations previously corrected using the lower resolution defect map of step f) are again processed using steps a) through h) to detect and correct for defects too small to be detected at lower spatial resolution representations.

12. The method wherein the filtering of step c) is performed with a k-nearest neighbor filter.

13. The method wherein the filtering of step c) is performed with a k-nearest neighbor filter.

14. An apparatus for the detection and removal of defects in digital images comprising:

means for preprocessing a digital image represented by pixel values to form a feature image in which defect pixels have large local contrast from their neighboring non-defect pixels;

first means for testing the value of each feature image pixel value to determine if the value is within a range of pixel values expected of defects;

filter means for edge-preserving spatial filtering of each of the feature image pixel values;

means for forming a residual value for each pixel as a function of the difference between the corresponding feature image pixel value and the filtered value from said filter means;

second means for testing each residual value from said forming means to determine if the residual value is within a range of residuals values expected of defects;

means for forming a map in which each pixel that is within the range of expected defects according to said first and said second testing means is marked as a defect; and

means for correcting the digital image as a function of the formed map.

15. An apparatus for the detection and removal of defects in digital images represented by multiple spatial resolutions ordered from lower to higher, comprising:

means for preprocessing a lower spatial resolution representation of the digital image by forming a feature image in which defect pixels have large local contrast from their neighboring non-defect pixels;

first testing means for testing the value of each feature image pixel value to determine if the value is within a range of pixel values expected of defects;

11

filter means for edge-preserving spatial filtering of each of the feature image pixel values that are within the range of expected defects;

residual means for forming a residual value for each pixel as a function of the difference between the corresponding feature image pixel value and the filtered value of said filter means;

second testing means for testing each residual value from said residual means to determine if the residual value is within a range of residuals values expected of defects;

mapping means for forming a map in which each pixel that is within the range of expected defects from said first and said second testing means is marked as a defect;

means for correcting the lower resolution representation of the digital image using the map created by said mapping means; and

means for correcting the higher resolution representations of the digital image using the map created by said mapping means.

16. A method for the detection and removal of local defects in digital images comprising the steps of:

a) generating a feature image from an original digital image;

b) creating an EPS-residuals image using the feature image;

c) testing and mapping image pixels based upon the values of the EPS residuals image and the pixel values of the feature image;

d) modifying the mapped image as a function of mapped values of neighboring pixels;

e) cleaning of defect pixels by an EPS-substitution process or by a greyscale erosion process; and

f) cleaning of defect pixels in different spatial resolution representations of the original image if different spatial resolution representations are present.

Appendix A--Docket 66,719

```
  ggg g   r rrr     aaaa    y    y
 g   gg   rr   r       a    y    y
 g    g   r        aaaaa    y    y
 g    g   r       a     a   y    y
 g   gg   r       a    aa   y   yy
  ggg g   r        aaaa a   yyy y
      g                         y
 g    g                    y    y
  gggg                     yyyy


 b
 b                                  t
 b                                  t
 b bbb     u    u    ssss     ttttt       eeee    p ppp     ssss
       b   u    u   s    s      t        e    e   pp   p   s    s
 ᴗ     b   u    u    ss         t        eeeeee   p    p    ss
 b     b   u    u     ss        t        e        p    p     ss
 bb  b     u   uu   s    s     t  t      e    e   pp   p   s    s
 b bbb      uuu u    ssss       tt        eeee    p ppp     ssss
                                                  p
                                                  p
                                                  p




                    t                 i
                    t
  cccc     aaaa   ttttt     n nnn     ii    p ppp
 c    c       a     t       nn   n     i    pp   p
 c        aaaaa     t       n    n     i    p    p
 c       a    a     t       n    n     i    p    p
 c    c  a   aa    t  t      n    n    i    pp   p
  cccc   aaaa a     tt       n    n   iii   p ppp
                                           p
                                           p
                                           p
```

Job:  busteps_042193.vf
Date: Wed Apr 21 14:31:37 1993

13

```
: Busteps_042193:(4-21-93) Applies a selective-averaging
:       (K-NN smoothing) filter to a 3-band image; also
:       calculates the difference (residual image) between the original
:       & the smoothed images.

:       Search window size must be symmetric,odd of dimensions
:       3x3 thru 51x51.
:       Filter currently treats data as in range 0-4999 *only*.
:       Input image array is stored as Int*2.

:       Intended for operation on a Sun workstation (e.g. Sparcstation 10)
:       running Sun OS.

: Calls:

:       Read_Hdr_isl
:               (image-format-specific calls)
:       Ihister
:               (image-format-specific calls)
:       Ihismnmx
:       Winbust_042193
:               (image-format-specific calls)
:               Hist_Init
:               Hist_Update
:               Iselavh
:       Add_Image
:               (image-format-specific calls)
:=================================================================
        program Busteps_042193

        integer*2 npix,nlin
        integer*2 ibuff(4096,3),buffn(4096,51,3)

        integer nav,npp,diagflg
        Integer npixm,nlm,np,nl,band,nbands,nbx
        integer pixformi,pixformo,pixformro,dumm1,dumm2
        integer gmin(3),gmax(3)
        integer hist(5000,3)
        integer*4 britelo,britehi

        real*4 fact1,fact2,bias
        real*4 deltime,Dtime,timearray(2)

        character*50 infil,outfil,resfil

        data npm,nlm/51,51/       !Max EPS window size!
        !data pixformro/3/        !residuals image written as unsigned byte!
        data fact1,fact2/1.0,-1.0/      !Used in Add_Image!
        data npixm,nbx/4096,3/
        data diagflg/0/           !For winbust3!

        common /par/dumm1,dumm2,nav

        --------------------- Interactive parameter input -------------------
                write(6,5)
5       format(' "Busteps_042193":'/,
     1                  '               Input image may be 1,2, or 3 bands;'/,
     2                  '               Input values should be in range 0-4999;'/,
     3                  '               Max. image width: 4096 pixels per line;'/,
     4                  '               Max. window height: 51 pixels'/,
     5                  '               Left- & right-edge virtual mirroring'/)
                write(6,10)
10              format( ' Enter in filename[ch50]:',$)
                read(5,'(a50)')infil    !Must be ISL IPP imagefile!
                write(6,30)
```

```
30       format( ' Enter out EPS filename[ch50]:',$)
         read(5,'(a50)')outfil   !Also ISL IPP!
         write(6,35)
35       format(' Enter out residuals filename[ch50]:',$)
         read(5,'(a50)') resfil   !Also ISL IPP!
         write(6,40)
40       format(' Enter averaging window size (odd,>=3,=<51):',$)
         read(5,*)np       !Side dimension of square window!
         If (np .lt. 3 .or. np .gt. nlm) then
                 Write(6,*)' Window size out of range--- Stop'
                 Call Exit(1)
         Endif
                 nl=np
                 npp=np*nl
         write(6,50)
50       format(' Enter no. of averaging points in window')
         write(6,51)
51       format('        [ =< np*nl , typically about (np*nl)/2 ]:',$)
         read(5,*) nav
         If (nav .lt. 2) then
             write(6,*)' Null operation expected!!'
             stop
         Else if (nav .gt. npp) then
             write(6,*)' # ave. pts exceeds window--Stop'
             stop
         Endif

    write(6,60)
60       format(' Enter low- & high-brightness thresholds [int]:',$)
         read(5,*) britelo,britehi

    write(6,70)
70       format(' Enter out residuals bias constant:',$)
         read(5,*) bias
         call read_hdr_isl(infil,npix,nlin,nbands,pixformi)
         If (nbands .gt. 10) then
                 write(6,*)' Input # bands too large-abort'
                 stop
         Endif

--------------------- Initialize arrays & constants ----------------------
                 npixm=npix
                 nbx=nbands

                 deltime=Dtime(timearray)         !Added 9/8/92!

                 pixformo=pixformi
                 pixformro=pixformi        !Added 8/7/92!


--------------------- Calc histogram min,max of input image ---------------
    write(6,100)infil
100      format(' input file is ',a50)

Note: This min/max call is ** required ** to properly filter the image.

         !Calc. multiband histogram:
         call Ihister(infil,npixm,nbx,ibuff,hist)
         write(6,*)'   [Multiband histogram calculation complete]'

         !Calc. band GL mins & maxs:
         call Ihismnmx(hist,nbands,gmin,gmax)
         write(6,*)'   [Multiband calculation of GL mins & maxs complete]'
         write(6,150)
150      format(/'    Band    GLmin    GLmax')
         Do ib=1,nbands
```

15

```
                     write(6,151) ib,gmin(ib),gmax(ib)
151                  format(5x,i4,2i9)
           Enddo

..test if image mins & maxs are within LUT range of 0-4999:
           Do ib=1,nbands
                If (gmax(ib) .gt. 4999) then
                     write(6,*)' Warning--gmax .gt. 4999 --- STOP'
                     Call Exit(1)
                Elseif (gmin(ib) .lt. 0) then
                     write(6,*)' Warning--gmin .lt. 0 --- STOP'
                     Call Exit(1)
                Endif
           Enddo

    ... Note: If gmax gt 4999,  then either rescale input data, or redimension
    his arrays in selav3 & selavb, & reset threshold on above tester.

    ----------------------- Create EPS-filtered image --------------------

           write(6,*)' [Beginning filtering]'
           If (np .ge. 3 .and. np .le. npm) then
                Call Winbust_042193(infil,outfil,ibuff,buffn,
1                    npixm,nbx,nlm,np,nl,gmin,gmax,pixformo,britelo,britehi,
2                    diagflg)

           Else
                Write(6,*) ' Np out of range---stop'
           Endif

    ------------------------- Create EPS residuals image -------------------

           Call Add_Image(infil,outfil,resfil,fact1,fact2,bias,pixformro)
                !residuals file is unsigned byte w/ mean="bias"!

           write(6,200)outfil
200        format(' Ending; EPS file is ',a50)
           write(6,201) resfil
201        format('                           EPS residuals file is ',a50)

           deltime=Dtime(timearray)
           write(6,800) timearray(1),timearray(2)
800        format(/'  User time (sec):',
1                 f8.2,'; system time (sec):',f8.2/)

           end

    ----------------------------------------------------------------------
    ----------------------------------------------------------------------

    Ihismnmx:(5-28-91) Calcs. min & max values in a multiband histogram.

           Subroutine Ihismnmx(hist,nbands,gmin,gmax)
           Integer hist(5000,3),nbands,gmin(3),gmax(3)

           Do ib=1,nbands
                Do k=1,5000
                     If (hist(k,ib) .gt. 0) then
                          gmin(ib)=k -1
                          go to 50
                     Endif
                Enddo
50              Do k=5000,1,-1
                     If (hist(k,ib) .gt. 0) then
                          gmax(ib)=k -1
                          go to 60



                     Endif
                Enddo
60              continue
           Enddo
           return
           end
```

EP 0 624 848 A2

```
ggg g   r rrr     aaaa     y     y
   gg   rr  r        a     y     y
    g   r         aaaaa    y     y
    g   r         a    a   y     y
   gg   r         a   aa   y     yy
ggg g   r          aaaa a   yyy  y
   g                             y
   g                        y    y
gggg                         yyyy


                              d          h              d
                              d          h              d
                              d          h              d
 rrr     eeee     aaaa     ddd d         h hhh     ddd d    r rrr
r        e   e       a     d   dd        hh  h     d   dd   rr   r
         eeeee    aaaaa    d    d         h   h    d    d   r
         e        a    a   d    d         h   h    d    d   r
         e   e    a   aa   d   dd         h   h    d   dd   r
         eeee      aaaa a   ddd d         h   h     ddd d   r

                          ─────────


                      t                     i
                      t
cccc     aaaa     ttttt    n nnn     ii      p ppp
   c        a        t     nn    n    i      pp    p
         aaaaa       t     n     n    i      p     p
         a    a      t     n     n    i      p     p
   c     a   aa      t  t   n     n    i      pp    p
cccc     aaaa a       tt    n     n   iii     p ppp
                                              p
                                              p
                                              p
```

Job:  read_hdr_isl.vf
Date: Wed Apr 21 14:12:06 1993

```
: Read_Hdr_ISL: (9-25-90) Reads key info from header of an ISL-fmt
:        image header. Closes image file upon conclusion.
:=====================================================================

        Subroutine Read_Hdr_ISL(filename,npix,nlin,nbd,pxform)

        Integer imgnum,ios,npx,nln,nbd,pxform,rwmode
        Integer*4 opnimg,getdef
        Integer*2 npix,nlin
        Character*50 filename
        !-----------------------------------------------------
:       include '/local/include/iopackagef'

            rwmode=0
            imgnum=0
        ios=Opnimg(imgnum,filename,rwmode,.FALSE.)
        If (ios .NE. SYSNRM) then
            write(6,*) ' Error during OPNIMG--Return'
            return
        Endif
        ios=Getdef(imgnum,npx,nln,nbd,pxform)
        If (ios .NE. SYSNRM) then
            write(6,*)' Error during Getdef--Return'
            return
        Endif
        Call Clsimg(imgnum)
            npix=npx
            nlin=nln
        return                -
        end
```

```
 ggg g    r rrr      aaaa     y     y
 g   gg   rr   r        a     y     y
 g    g   r          aaaaa    y     y
 g    g   r          a    a   y     y
 g   gg   r          a   aa    y   yy
  ggg g   r          aaaa a    yyy y
      g                             y
 g    g                       y     y
  gggg                          yyyy


          h
    i     h              i                   t
    i     h                                  t
    ii    h hhh          ii      ssss     ttttt     eeee     r rrr
    i     hh   h         i       s   s       t      e    e   rr   r
          h    h         i        ss         t      eeeeee   r
    i     h    h         i         ss        t      e        r
    i     h    h         i       s    s      t  t   e    e   r          ..
    iii   h    h         iii      ssss         tt     eeee   r          ..




                        t                    i
                        t
  cccc      aaaa      ttttt    n nnn        ii     p ppp
  c    c       a        t      nn   n       i      pp   p
  c         aaaaa       t      n    n       i      p    p
  c         a    a      t      n    n       i      p    p
  c    c    a   aa      t  t    n    n       i      pp   p
   cccc     aaaa a        tt   n    n       iii    p ppp
                                                   p
                                                   p
                                                   p
```

Job:  ihister.vf
Date: Wed Apr 21 14:11:36 1993

```
:  Ihister:(5-28-91) Calcs. multiband histogram of an image using a line     8
:           buffer only. Intended for use w/ selectave2.for.

        Subroutine Ihister(infil,npixm,nbx,ibuff,hist)
        Character*50 infil
        integer npixm,nbx
        integer arrtyp,ostatus,gstatus,rstatus,imgin,npx,nln,nbands,pixform
        integer opnimg,getdef,rdline,line
        integer hist(5000,3)
        integer*2 ibuff(npixm,nbx)

:       include '/local/include/iopackage.inc'
        arrtyp=IDINT2

:...Initialize the histogram:
        Do ib=1,nbx
                Do k=1,5000
                        hist(k,ib)=0
                Enddo
        Enddo

:...  `en the image:
        imgin=0
        ostatus=opnimg(imgin,infil,0,.false.)
        If (ostatus .ne. SYSNRM) then
                write(6,15) infil
15              format(' Ihister: input image ',a50,' not open--abort')
                stop
        Endif

        gstatus=getdef(imgin,npx,nln,nbands,pixform)
        If (gstatus .ne. SYSNRM) then
                write(6,20)
20              format(' Ihister: Gstatus error on input--abort')
                stop
        Endif

:...Read the image lines into the histogram:

        Do j=1,nln
                line=j -1
                rstatus=rdline(imgin,line,-1,ibuff,npixm,arrtyp)
                If (rstatus .ne. SYSNRM) then
                        write(6,50) j
50                      format(' Ihister: error reading line ',i4,'--abort')
                        stop
                Endif
                Do ib=1,nbands
                        Do i=1,npx
                                k=ibuff(i,ib) +1
                                hist(k,ib)=hist(k,ib) +1
                        Enddo
                Enddo
        Enddo

        Call clsimg(imgin)
        return
        end
```

```
ggg g    r rrr     aaaa      y     y
j  gg    rr   r        a     y     y
j   g    r         aaaaa     y     y
j   g    r         a     a   y     y
j  gg    r         a    aa   y    yy
ggg g    r         aaaa a    yyy  y
    g                             y
j   g                        y    y
 gggg                         yyyy


                             b                         t
              i              b                         t
              i              b                         t
j     w      ii    n nnn     b bbb    u    u    ssss  ttttt
j  w  w       i    nn   n    bb   b   u    u    s   s   t
j  w  w       i    n    n    b      b u    u    ss     t
j  w  w       i    n    n    b      b u    u     ss    t
j  w  w       i    n    n    bb   b   u   uu   s   s   t   t
 ww ww      iii    n    n    b bbb     uuu u    ssss      tt


                      t                  i
                      t
 cccc     aaaa     ttttt    n nnn       ii     p ppp
:    c        a       t     nn   n       i     pp    p
:         aaaaa       t     n    n       i     p     p
:         a    a      t     n    n       i     p     p
:    c    a   aa      t  t   n    n       i     pp    p
 cccc     aaaa a       tt   n    n      iii    p ppp
                                               p
                                               p
                                               p
```

Job:  winbust_042193.vf
Date: Wed Apr 21 14:16:23 1993

```
: Winbust_042193:
:       Uses a barrel-shifting line buffer in multiple bands.
:       Implements a "fast-histogram" method.


: Key Parameters:
:       infil:  Ch*50, name of input image file; not overwritten.
:       outfil: Ch*50, name of output filtered image file.
:       ibuff:  Int*2, all-band line buffer array; must be dimensioned by
:                       calling program.
:       buffn:  Int*2, strip buffer array; must be dimensioned by calling
:                       program.
:       npixm:  Int*4, Max. allowed width of image, in pixels per line.
:                       Input.
:       npix:   Int*4. Actual width of image, in pixels per line.
:                       Read from image header.
:       nbx:    Int*4, Max. allowed no. of bands in input image. Input.
:       nlm:    Int*4, Max. allowed height of filter window (in lines)
:                       & thus max. allowed height of strip buffer.
:                       Input.
:       np,nl:  Int*4, Actual width, height of filter window in pixels,
:                       lines. Input.
:       gmin,gmax:Int*4, 3-element vectors. Assumed min & max band GLs
:                       of input image. Assumed previously computed. Input.
:                       Note this limits current max. no. of bands to 3.
:       pixformo:Int*4, Datatype of output filtered IPP image file.
:                       E.g. 3=uns byte, 4=signed Int*2, 6=signed R*4.
:                       Input.
:       gmn,gmx: Int*4. Returned via Common. Set to current
:                       -band value of gmin & gmax, respectively. These values MUST
:                       be set prior to calling Iselavh; Function Iselavh uses
:                       these values passed via Common..
:       nav:    Int*4, no. of samples to average in each filter window.
:                       Passed thru Common by caller.


:       General comments:
:       (1)     99% of the complexity of this subroutine is due to
:               the implementation of the strip buffer. The advantage of the
:               strip buffer is that it allows "convolution"-type window
:               operations while keeping at any one time in memory only
:               npix*nl*nbands worth of image, instead of npix*nlin*nbands for
:               input & output images.
:       (2)     Note that the EPS filter is *NOT* recursive, i.e. it only uses
:               OLD, original GL values in its input weights; thus output from
:               previous window filter do not affect neighboring window outputs.
:==================================================================================

        Subroutine Winbust_042193(infil,outfil,ibuff,buffn,npixm,nbx,
    1           nlm,np,nl,gmin,gmax,pixformo,britelo,britehi,diagflg)

        Character*50 infil,outfil

        integer imgin,imgout,ostatus,gstatus
        integer nbx,nbands,pixform,pixformo
        integer pstatus,ostatus2,rstatus,wstatus,npx,nln,npixm,npix,npixb
        integer nlin,nlinb
        integer arrtyp,lininc,jtype
        integer gmn,gmx,Iselavh,nav,gmin(3),gmax(3)
        integer nlm,np,nl,nl2,np2,nbinx,gl_cent
        integer opnimg,getdef,putdef,rdline,wrline
        integer diagflg
        integer*4 britelo,britehi,count

        integer*2 ibuff(npixm,nbx),buffn(npixm,nlm,nbx)
        integer*2 his(5000)
```

```
        Integer*2 cls(4096)        !Note implicit max. of npix=4096 !

        data nbinx/5000/

        common /par/gmn,gmx,nav

:       include '/local/include/iopackage.inc'
:       remove above comment-out before compilation!

        arrtyp=IDINT2
        nl2=nl/2          !Half-height of filter window
                          !E.g, for nl=5, nl2=2   !
        np2=np/2          !Half-width        "        "

        count=0

:------------------------------------------------------------------------
:...Open input & output images for sequential I/O:

              imgin=0
              ostatus=SYSNRM
              ostatus=opnimg(imgin,infil,0,.false.)
              If (ostatus .ne. SYSNRM) then
                  write(6,70) infil
70                format(' Winbust_042193:In image ',a50,' not open-abort')
                  Call Exit(1)
              Endif

              gstatus=SYSNRM
              gstatus=getdef(imgin,npx,nln,nbands,pixform)
              If (gstatus .ne. SYSNRM) then
                      write(6,75)
75                    format(' Gstatus error on input --abort')
                      Call Exit(1)
              Endif

              npix=npx          !Actual no. pixels/line in image
              nlin=nln          !Actual no. lines in image
              npixb=npix +2*np2 !Actual no. of pels/line in filter buffer
              If (npixb .gt. npixm) then
                      write(6,*)' Winbust_042193: Npixb > Npixm--Abort'
                      Call Exit(1)
              Endif
              nlinb=nlin +2*nl2
              !nbands=Actual no. of bands in image

        write(6,80)
80      format(//' "Winbust_042193": Npix Nlin  Type Nbands Typeo  Np  Nav',
       1         ' GLthlo GLthhi Diagflg')
              write(6,81) npix,nlin,pixform,nbands,pixformo,np,nav,
       1                  britelo,britehi,diagflg
81            format(21x,2i5,i6,i7,i6,i4,i5,2i7,i8)

              imgout=0
              pstatus=SYSNRM
        pstatus=putdef(imgout,npx,nln,nbands,pixformo)
        If (pstatus .ne. SYSNRM) then
                write(6,*)' Pstatus error for output-abort'
                Call Exit(1)
        Endif
        ostatus2=SYSNRM
        ostatus2=opnimg(imgout,outfil,1,.false.)
                    ! "1" for write-only!
        If (ostatus2 .ne. SYSNRM) then
                write(6,*)' Output image not open-abort'
```

```
                    Call Exit(1)                                            12
          Endif

                    lininc=nlin/8    !Variable used in writing current line-number
                    jtype=lininc     ! Ditto (just screen i/o related)
                    rstatus=SYSNRM
                    wstatus=SYSNRM


c-----------------------------------------------------------------------
c....Load 1st strip into barrel buffer:
          Do j=1,nl2 +1             !Do per line in 1st buffer strip:
                    line=j -1        !(Damned "zero-starting" C array convention)
                    rstatus=rdline(imgin,line,-1,ibuff,npixm,arrtyp)
                    If (rstatus .ne. SYSNRM) then
                       write(6,110) j
110                    format(' "Winbust_042193": Read error at line ',i4,'-abort')
                       Call Exit(1)
                    Endif

                    !Transfer GLs from line buffer to strip buffer:
                    !(Someone should be able speed up all this moving around of data)
                    !i =horiz pixel index for original image;
                    !i2=horiz pixel index for central (non-mirror) pixels in strip bu
                    !i3=horiz pixel index for edge (mirror) pixels in strip buffer.

                          j2=j +nl2
                          j3=nl2 +2 -j
                    Do ib=1,nbands
                          Do i=1,np2 +1               !Left
                             i2=i +np2
                             i3=np2 +2 -i
                             buffn(i2,j2,ib)=ibuff(i,ib)
                             buffn(i3,j2,ib)=ibuff(i,ib)
                             buffn(i2,j3,ib)=ibuff(i,ib)
                             buffn(i3,j3,ib)=ibuff(i,ib)
                          Enddo
                          Do i=np2 +2,npix -np2 -1          !Central
                             i2=i +np2
                             buffn(i2,j2,ib)=ibuff(i,ib)
                             buffn(i2,j3,ib)=ibuff(i,ib)
                          Enddo
                          Do i=npix -np2,npix      !Right
                             i2=i +np2
                             i3=2*npix +np2 -i
                             buffn(i2,j2,ib)=ibuff(i,ib)
                             buffn(i3,j2,ib)=ibuff(i,ib)
                             buffn(i2,j3,ib)=ibuff(i,ib)
                             buffn(i3,j3,ib)=ibuff(i,ib)
                          Enddo

                    Enddo

             !Write a status display to standard output!
             If ((j -nl2 -1) .ge. jtype) then
                    write(6,600) j              !Write current line number to stdio
                    jtype=jtype +lininc
             Endif
          Enddo    !End top "j" loop!

                    jend=nl !"jend" is barrel index to most recent line
                    jc=jend -nl2 !"jc" is barrel index to "middle" line
             !Above sections only serves to fill the strip buffer for the
             !       first time; it gets more complicated as the buffer contents move
             !       "down" in the image.

:-----------------------------------------------------------------------
```

13

```
...This "j" loop first filters the buffer contents that already exist at
the start of the loop; at the end of the loop a new line is read &
the buffer line index is rotated.

        Do j=nl2 +2,nlin +nl2 +1        !Indexes the (*last* line +1) of current
             jo=j -nl2 -1    !Image index of output line!


        !Mark which pixels in the current line will be filtered:
        Do i=np2 +1,npixb -np2
             Do ib=1,nbands
                     If (buffn(i,jc,ib) .GT. britelo .and.
                          buffn(i,jc,ib) .LT. britehi) then    !Don't filter!
                             cls(i)=0
                             go to 210
                     Endif
             Enddo
             cls(i)=1            !mark for filtering!
             count=count +1   !Increment to-be-filtered pixel counter!
210      continue
        Enddo

        Do ib=1,nbands
             gmn=gmin(ib)
             gmx=gmax(ib)

             !Load window in central part of barrel buffer:
             ------------------------------------------------------------------

             !Initialize histogram for 1st window location in a line:
             !(I.e., completely recalculate histogram of window for current band
             !  ; no carry-over.
             ! Note that pixels within 1/2-window width of vert image boundaries
             !  not filtered.
             !Below "i" same as above "i2", i.e. strip buffer horiz index.

             i=np2 +1                  !Center-of-window index, 1st window!
             io=i -np2                 !Output pixel index!

             Call Hist_init(nlm,np,nl,np2,buffn,npixm,nbx,
                  npixb,nbands,i,jend,ib,his,nbinx)

                     gl_cent=buffn(i,jc,ib) !GL of window center
                                        ! at this location!
             If (cls(i) .eq. 1) then
                     ibuff(io,ib)=Iselavh(his,nbinx,gl_cent) !Filter
             Else
                     ibuff(io,ib)=gl_cent
             Endif


        !Update histogram for later window locations in a line:

             Do i=np2 +2,npixb -np2  !Center-of-window index!
                     io=i -np2        !Output pixel index!

             Call Hist_update(nlm,np,nl,np2,buffn,
                  npixm,nbx,npixb,nbands,i,jend,ib,his,nbinx)


                     !If passes brightness thresholds test, then filter:
                     gl_cent=buffn(i,jc,ib) !GL of window center
                                        ! at this location!
             If (cls(i) .eq. 1) then
                     ibuff(io,ib)=Iselavh(his,nbinx,gl_cent) !Filter
             Else
```

```
                       ibuff(io,ib)=gl_cent
                Endif                                                    14

          Enddo

          ----------------------------------------------------------------

     Enddo        !End band loop!

          line=jo -1
     wstatus=wrline(imgout,line,-1,ibuff,npixm,arrtyp)
     If (wstatus .ne. SYSNRM) then
          write(6,410) jo
410       format(' "Winbust_042193": write error at line ',i4,'-abort')
          Call Exit(1)
     Endif

          !Rotate barrel-buffer line indices:
          jend=jend +1
          If (jend .gt. nl) jend=1
          jc=jc +1
          If (jc .gt. nl) jc=1

     If (jo .le. nlin -nl2 -1) then

          j2=jend !For bottom mirror!

          !Read new image line:
          line=j -1
          rstatus=rdline(imgin,line,-1,ibuff,npixm,arrtyp)
          If (rstatus .ne. SYSNRM) then
               write(6,430) j
430            format(' "Winbust_042193":Error reading line ',i4,'-abort
               Call Exit(1)
          Endif

          Do ib=1,nbands    !Overwrite oldest line in barrel-buffer!
            Do i=1,np2 +1            !Left
               i2=i +np2
               i3=np2 +2 -i
               buffn(i2,jend,ib)=ibuff(i,ib)
               buffn(i3,jend,ib)=ibuff(i,ib)
            Enddo
            Do i=np2 +2,npix -np2 -1            !Central
               i2=i +np2
               buffn(i2,jend,ib)=ibuff(i,ib)
            Enddo
            Do i=npix -np2,npix       !Right
               i2=i +np2
               i3=2*npix +np2 -i
               buffn(i2,jend,ib)=ibuff(i,ib)
               buffn(i3,jend,ib)=ibuff(i,ib)
            Enddo
          Enddo

     Else !Virtual mirror of bottom of image:

          j2=jend +1     !Buffer index of "top" line in buffer!
          If (j2 .gt. nl) j2=1

          j2=j2 -1               !(12-18-92)
          If (j2 .lt. 1) j2=nl   !(12-18-92)
          Do ib=1,nbands
               Do i=1,npixb
                    buffn(i,jend,ib)=buffn(i,j2,ib)
               Enddo
```

26

15.

```
            Enddo

        Endif

        !Write a status display to standard output!
        If (j .ge. jtype) then
            write(6,600) j
600         format(10x,' Line ',i4,' is completed')
            jtype=jtype +lininc
        Endif

        Enddo   !End main "j" loop!


        write(6,800) count
800     format(/' No. of pixels filtered:',i8)
        write(6,*)'        [Winbust_042193  completed]'
        Call clsimg(imgin)
        Call clsimg(imgout)
        return
        end
```

```
 ggg g    r rrr      aaaa     y     y
g    gg   rr   r        a     y     y
g     g   r         aaaaa     y     y
g     g  .r        a     a    y     y
g    gg   r        a    aa    y    yy
 ggg y    r         aaaa a    yyy  y
     g                             y
g      g                      y     y
 gggg                          yyyy


h                  i                  t                        i                    i
h                                     t
h                  i                  t
h hhh             ii      ssss     ttttt        ii      n nnn      ii
hh    h            i     s    s       t          i      nn   n      i
h    l             i      ss          t          i      n    n      i
h     h            i       ss         t          i      n    n      i
h     h            i     s    s       t  t        i     n    n      i
 h    h           iii     ssss         tt        iii    n    n     iii



                                 t                  i
                                 t
 cccc     aaaa    ttttt    n nnn     ii     p ppp
c    c       a       t     nn   n     i     pp    p
c         aaaaa      t      n    n     i     p     p
c        a     a     t      n    n     i     p     p
c    c    a    aa    t  t    n    n     i     pp    p
 cccc     aaaa a      tt     n    n    iii    p ppp
                                             p
                                             p
                                             p
```

Job:   hist_init.vf
Date: Wed Apr 21 14:29:59 1993

```
c Hist_init:(8-12-91) Used in Winbust_042193. Initializes & calcs a histogram
c          of a window.

       Subroutine Hist_init(nlm,np,nl,np2,buffn,npixm,nbx,
    1          npix,nbands,i,jend,ib,his,nbinx)

       integer*2 buffn(npixm,nlm,nbx)
       integer*2 his(nbinx)

       integer nlm,np,nl,np2,npixm,npix,nbx,nbands,i,jend,ib,nbinx
       integer gmn,gmx,j0

       common /par/gmn,gmx

c...Initialize histogram to zero:
       Do k=gmn+1,gmx+1
            his(k)=0
       Enddo

c...Load histogram of window:
            j0=jend
       Do jj=1,nl
            j0=j0 +1
            If (j0 .gt. nl) j0=1
            Do ii=1,np
                 i0=i -np2 -1 +ii
                 ia=buffn(i0,j0,ib) +1
                 his(ia)=his(ia) +1
            Enddo
       Enddo

       return
       end
```

```
 ggg g   r rrr    aaaa    y    y
 ʝ   gg  rr  r       a   y    y
 ʝ    g  r       aaaaa  y    y
 ʝ    g  r       a    a  y   y
 ʝ   gg  r       a   aa   y  yy
  ggg g  r        aaaa a   yyy y
      g                        y
 ʝ    g                  y    y
  gggg                    yyyy


 ꓹ                                                              d
 ꓹ            i                      t                          d
 ꓹ                                   t                          d
 ꓹ hhh       ii      ssss    ttttt            u    u   p ppp   ddd d
 ꓹh   h      i      s    s     t              u    u   pp   p   d   dd
 ꓹ    h      i       ss        t              u    u   p    p   d    d
 ꓹ    h      i        ss       t              u    u   p    p   d    d
 ꓹ    h      i      s    s     t  t           u   uu   pp   p   d   dd
 ꓹ    h      iii     ssss       tt             uuu u   p ppp   ddd d
                                                      p
                              _____               p
                                                      p


                              t                i
                              t
  cccc     aaaa     ttttt     n nnn          ii    p ppp
 ꓽ    c       a       t       nn   n          i    pp   p
 ꓽ         aaaaa      t        n    n         i     p    p
 ꓽ         a    a     t        n    n         i     p    p
 ꓽ    c    a   aa     t  t     n    n         i     pp   p
  cccc     aaaa a      tt      n    n         iii   p ppp
                                                    p
                                                    p
                                                    p




                         Job:  hist_update.vf
                         Date: Wed Apr 21 14:30:52 1993
```

```
c Hist_update: Used in Winbust_042193. Updates a histogram
c           & loads a window a la "fast median" filter.                    19
c==========================================================

      Subroutine Hist_update(nlm,np,nl,np2,buffn,npixm,nbx,
    1           npix,nbands,i,jend,ib,his,nbinx)

      integer*2 buffn(npixm,nlm,nbx)
      integer*2 his(nbinx)

      integer npm,nlm,np,nl,np2,npixm,nbx,nbands,i,jend,ib,nbinx
      integer j0,idrop,iadd,npix

         j0=jend
         idrop=i -np2 -1
         iadd=i +np2
      Do jj=1,nl
         j0=j0 +1
         If (j0 .gt. nl) j0=1
         ia=buffn(idrop,j0,ib) +1
         his(ia)=his(ia) -1
         ia=buffn(iadd,j0,ib) +1
         his(ia)=his(ia) +1
      Enddo

      return
      end
```

```
ggg g    r rrr     aaaa     y     y
g    gg   rr   r        a    y     y
g    g    r        aaaaa    y     y
g    g    r       a     a   y     y
g    gg   r       a    aa   y    yy
ggg g    r        aaaa a   yyy  y
       g                          y
g      g                    y     y
 gggg                        yyyy


                          ll                       h
    i                      l                       h
                           l                       h
   ii     ssss     eeee    l      aaaa    v     v  h hhh
    i     s    s   e    e   l         a   v     v  hh    h
    i      ss      eeeeee   l      aaaaa   v     v  h     h
    i       ss     e        l     a     a  v   v   h     h
    i     s    s   e    e   l     a    aa   v v    h     h
   iii    ssss     eeee    111    aaaa a     v     h     h



                    t               i
                    t
  cccc     aaaa    ttttt   n nnn    ii    p ppp
 c      c       a    t     nn    n   i    pp    p
 c        aaaaa      t     n     n   i    p     p
 c        a     a    t     n     n   i    p     p
 c      c  a    aa   t  t   n     n   i    pp    p
  cccc     aaaa a     tt    n     n  iii   p ppp
                                          p
                                          p
                                          p
```

Job:  iselavh_042193.vf
Date: Wed Apr 21 14:21:43 1993

```
: Iselavh: (6-19-91) Mod'd from selavb to eliminate heavy central        21
:           weighting on initial-point in interest of speed.
:           Should be valid for all window sizes.
:           Note that this function runs more slowly as the image dynamic range
:           [gmax -gmin] increases.
:           Assumes histogram is precalculated.
:           "ac" is the GL of the "center" pixel in the current window.

:           References:

:           (1) "Noise Cleaning by Iterated Local Averaging", by L. Davis
:           & A. Rosenfeld, IEEE Transactions Systems, Man, Cybernetics,
:           Vol. SMC-8, No. 9, pp. 705-710, Sept. 1978.

:           (2)" Digital image smoothing and the sigma filter",
:           by J. S. Lee, CVGIP, V. 24, pp255-269 (1983). Sigma filter, however,
:           uses a *fixed* range, in terms of +/- a*sigma, where sigma=est.
:           std. dev. of additive noise.

:           This function computes a selective-averaging filter output for a
:           current location of a rectangular window of 1 band of an image array,
:           & returns this output as the standard function return.

:           Key Parameters:
:                   his:     Int*2(nbinx); Histogram of GLs in current window;
:                            Assumes that GL value corresponding to a histo bin is
:                            offset by 1, e.g. his(1) corresponds to GL=0.
:                   nbinx:   Int*4; Max. no. of bins in histogram.
:                   ac:      Int*4; spatially-central GL in current window.
:                   gmn,gmx:Int*4; min & max GLs in entire image for present band.
:                            Passed from caller via Common.
:                   nav:     Int*4; desired no. of pixels to average in the
:                            current window.

:           Output "iselavh" will be a weighted sum of histogram bin occupancies;
:           this weighted sum is num/den.

:========================================================================================

        Integer Function Iselavh(his,nbinx,ac)

        real*4 val,val1,val2

        integer*2 his(nbinx)
        integer*2 cnt
        integer gmin,gmax,nav,ac,nbinx
        Integer ar,al,denr,denl
        INTEGER*4 NUM,DEN

        common /par/gmin,gmax,nav
        common /par2/num,den,ar,al,cnt,val1,val2,val
        !-------------------------------------------------------------------

        ! average the nav-nearest grey levels ...
                den=his(ac +1)
        if (den .ge. nav) then   !If have >den local vals =ac,then no-change!
                iselavh=ac
                return
        endif
                num=ac*his(ac +1)

        do k=1,4999
                ar=ac +k            !Current GL to "right" of center GL
                al=ac -k            !"     "          "left" of "     "
                if (ar .le. gmax) then
                        num=num +ar*his(ar +1)
```

22

```
                den=den +his(ar +1)
        endif
        if (al .ge. gmin) then
                num=num +al*his(al +1)
                den =den +his(al +1)
        endif
        if (den .gt. nav) then
                cnt=den -nav
                denr=0
                denl=0
                If (ar .le. gmax) denr=his(ar +1)
                If (al .ge. gmin) denl=his(al +1)
                val2=Float(denr +denl)
                val1=Float(ar*denr) +Float(al*denl)
                val=val1/val2
                iselavh=Nint((Float(num) -cnt*val)/Float(nav))
                return
        else if (den .eq. nav) then
                iselavh=Nint(float(num)/float(den))
                return
        Endif
    enddo
        write(6,*)' Unexpected termination in iselavh!!'
        write(6,*)' Local Iselavh values at Exit:'
        write(6,*)'     Central GL value (ac):',ac
        write(6,*)'     Gmin, Gmax:',gmin,gmax
        write(6,*)'     Nav:',nav
        Call Exit(1)
    end
```

```
 ggg g   r rrr      aaaa      y      y
ɟ   gg   rr   r        a      y     y
ɟ    g   r         aaaaa      y     y
ɟ    g   r         a     a    y     y
ɟ   gg   r         a    aa    y    yy
 ggg g   r         aaaa a    yyy y
      g       .                    y
ɟ    g                       y     y
 gggg                         yyyy


                  d          d
                  d          d                i
                  d          d
 aaaa       ddd d      ddd d              ii      m m mm       aaaa       ggg g
     a      d   dd    d    dd              i      mm m  m         a      g    gg
 aaɀ   .    d    d    d     d              i      m   m   m    aaaaa     g      g
ɀ     a     d    d    d     d              i      m   m   m    a     a   g      g
ɀ    aa     d   dd    d    dd              i      m   m   m    a    aa   g    gg
  aaaa a    ddd d      ddd d              iii     m   m   m    aaaa a    ggg g
                                                                              g
                       _____                                          g      g
                                                                        gggg




                  t                           i
                  t
 cccc       aaaa      ttttt     n nnn     ii      p ppp
ɀ     c         a       t       nn   n     i      pp   p
ɀ           aaaaa       t       n     n    i      p     p
ɀ         a     a       t       n     n    i      p     p
ɀ     c   a    aa       t  t    n     n    i      pp   p
  cccc      aaaa a       tt      n     n   iii     p ppp
                                                  p
                                                  p
                                                  p
```

Job:   add_image.vf
Date:  Wed Apr 21 14:28:56 1993

```
c       Add_Image:(6-26-91) Adds 2 1-3 band images w/ additive       24
c       constants.
c       Assumes the internal image representation is Real*4
c       Max. # pixels/line=4096.

        Subroutine Add_Image(infil1,infil2,outfil,fact1,fact2,const,pixformo)
        Character*50 infil1,infil2,outfil
        Real*4   rbuff1(4096,3),rbuff2(4096,3)
        Real*4 fact1,fact2,const

        integer imgin1,imgin2,imgout,nimx,ostatus,gstatus
        integer nbands,nbandsc,pixform,pixformc,pixformo,band
        integer pstatus,ostatus2,rstatus,wstatus,npx,nln,npx2,nln2
        integer opnimg,getdef,putdef,rdline,wrline
        integer arrtyp,lininc,jtype,imax

        data imax/4096/

c       include '/local/include/iopackagef'

        arrtyp=IDREA4


c...Open input color image:
                imgin1=0
                ostatus=opnimg(imgin1,infil1,0,.false.)
                If (ostatus .ne. SYSNRM) then
                        write(6,10) infil1
 10                     format(' In color image ',a50,' not open-abort')
                        Call Exit(1)
                Endif

                gstatus=getdef(imgin1,npx,nln,nbands,pixform)
                If (gstatus .ne. SYSNRM) then
                        write(6,20)
 20                     format(' Gstatus error on input --abort')
                        Call Exit(1)
                Endif

                If (npx .gt. imax) then
                    write(6,*) ' Npx .ge. imax--abort'
                    write(6,*)' Npx=',npx
                    write(6,*)' Imax= ',imax
                    Call Exit(1)
                Endif
                npix=npx
                nlin=nln
        write(6,45)
 45     format(//' "Add_Image": Npix Nlin  Type  Nbands   Typeo')
                write(6,50) npix,nlin,pixform,nbands,pixformo
 50             format(13x,2i5,i6,i8,i8)

c...Open 2nd input class map:
                imgin2=0
                ostatus=opnimg(imgin2,infil2,0,.false.)
                If (ostatus .ne. SYSNRM) then
                        write(6,60) infil2
 60                     format(' In 2nd image ',a50,' not open-abort')
                        Call Exit(1)
                Endif

                gstatus=getdef(imgin2,npx2,nln2,nbandsc,pixformc)
                If (gstatus .ne. SYSNRM) then
                        write(6,65)
 65                     format(' Gstatus error on 2nd input --abort')
                        Call Exit(1)
```

```
            Endif                                                              25
            If (npx2 .ne. npx .or. nln2 .ne. nln) then
                write(6,*)' Input image dimensions unequal-Call Exit(1)'
                Call Exit(1)
            Endif

            imgout=0
      pstatus=putdef(imgout,npx,nln,nbands,pixformo)
      If (pstatus .ne. SYSNRM) then
                write(6,*)' Pstatus error for output-abort'
                Call Exit(1)
      Endif
      ostatus2=opnimg(imgout,outfil,1,.false.)
                     ! "1" for write-only!
      If (ostatus2 .ne. SYSNRM) then
                write(6,*)' Output image not open-abort'
                Call Exit(1)
      Endif

      write(6,*)' Fact1, Fcat2, Const=',fact1,fact2,const

c...Read each line of input image:
                lininc=nlin/4
                jtype=lininc
      Do j=1,nlin
                line=j-1

                !Read multiband line from color image:
                rstatus=rdline(imgin1,line,-1,rbuff1,imax,arrtyp)
                       ! "-1" for all bands!
                If (rstatus .ne. SYSNRM) then
                   write(7,80)j
 80                format(' Error reading image line -abort')
                   Call Exit(1)
                Endif

                !Read line from 1-band classmap:
                rstatus=rdline(imgin2,line,-1,rbuff2,imax,arrtyp)
                        ! "-1" for all bands!
                If (rstatus .ne. SYSNRM) then
                   write(7,85)j
 85                format(' Error reading image line -abort')
                   Call Exit(1)
                Endif

         Do band=1,nbands
                Do i=1,npix
                     rbuff1(i,band)=fact1*rbuff1(i,band)
 1                            +fact2*rbuff2(i,band) +const
                Enddo

c        ...Clip data to output range:
           If (pixformo .eq. IDBYTE) then
                Do i=1,npix
                     rbuff1(i,band)=Amax1(rbuff1(i,band),0.)
                     rbuff1(i,band)=Amin1(rbuff1(i,band),255.)
                Enddo
           Else if (pixformo .eq. IDINT1) then
                Do i=1,npix
                     rbuff1(i,band)=Amax1(rbuff1(i,band),-128.)
                     rbuff1(i,band)=Amin1(rbuff1(i,band),127.)
                Enddo
           Else if (pixformo .eq. IDINT2) then
                Do i=1,npix
                     rbuff1(i,band)=Anint(rbuff1(i,band))
                     rbuff1(i,band)=Amax1(rbuff1(i,band),-32768.)
```

```
                        rbuff1(i,band)=Amin1(rbuff1(i,band),32767.)        26
                Enddo
            Else if (pixformo .eq. IDREA4) then
            Else
                write(6,100)
100             format(' Pixformo=',i3,' not implemented-abort')
                Call Exit(1)
            Endif
        Enddo !End band loop!

c           ...Write output line of data:
                line=j-1
            wstatus=Wrline(imgout,line,-1,rbuff1,imax,arrtyp)
            If (wstatus .ne. SYSNRM) then
                write(6,*)' Error in wstatus-abort'
                Call Exit(1)
            Endif
                If (j .ge. jtype) then
                    write(6,200) j
200                 format(10x,' Line ',i4,' is completed')
                    jtype=jtype +lininc
                Endif
        Enddo            !End line loop!

c...Close images
        Call clsimg(imgin1)
        Call clsimg(imgin2)
        Call clsimg(imgout)
        return
        end
```

Appendix B--Docket 66,719

```
   ggg g    r rrr     aaaa     y     y
  g   gg    rr   r        a    y    .y
  g    g    r         aaaaa    y     y
  g    g    r        a     a   y     y
  g   gg    r        a    aa   y    yy
   ggg g    r         aaaa a  .yyy y
       g  .                        y
  g    g                      y     y
   gggg                       yyyy


  b                                         ll
  b                                         l
  b                           t             l
  b bbb     u    u    ssss   ttttt    cccc  l     aaaa
  bb   b    u    u    s   s    t     c    c l        a
  b    b    u    u    ss       t     c      l     aaaaa
  b    b    u    u      ss     t     c      l     a    a
  bb   b    u   uu    s   s    t  t  c    c l     a   aa
  b bbb     uuu  u    ssss      tt    cccc  lll   aaaa a


                   ────────


                     t             i
                     t
   cccc     aaaa   ttttt    n nnn   ii   p ppp
  c    c       a     t      nn   n   i   pp    p
  c         aaaaa    t      n    n   i   p     p
  c        a     a   t      n    n   i   p     p
  c    c   a    aa   t  t    n    n   i   pp    p
   cccc     aaaa a    tt    n    n   iii  p ppp
                                         p
                                         p
                                         p
```

Job:  bust_class.vf
Date: Wed Apr 21 14:41:37 1993

```
c  Bust_Class Creates ** two-state ** class map from 3-band residuals image.
c         Optionally dilates classmap before output.
c         Calls: Irgb_load_isl, Buster_Class_Create, Dilate_Class, Ioutput_isl.

c         Image arrays:
c                   res      :3-band dirty residuals image     (input)
c                   cls      :1-band classmap (output)


c         residuals image & class map are assumed Integer*2 values (i.e., not real
c         Note demonstration max image size of 1870 x 1374.

c         Does not assume that residuals image is biased by a predetermined
c         constant; this info is implicit in the GL-res thresholds entered by the

c         Calls:
c                   Irgb_load_isl
c                            (Calls image-format-specific io routines)
c                   Buster_Class_Create
c                   Dilate_Class
c                   Ioutput_isl
c                            (calls image-format-specific io routines).
c==========================================================================

         Program Bust_Class

         Integer*2 res(3,1870,1374)
         Integer*2 cls(1870,1374),cls2(1870,1374)

         integer*2 npix,nlin
         Integer npixm,nlinm,band,nbands,nbc,nbx,cnt,np,nl
         integer pixformi,pixformo


         integer cnttot
         integer ix0,iy0,nx,ny
         integer dgl,glmin,glmax,gltmin,gltmax,dilflg,byte

         real*4 deltime,Dtime,timearray(2)

         character*50 infil,outfil,resfil,clsfil
         character*1 iname(50),iname2(50)
         character*50 comm50

         equivalence (comm50,iname2(1))
         data dgl/255/           !Defines "dirt" class!
         data byte/3/
         data nbx,npixm,nlinm/3,1870,1374/
         data pixformo/3/        !Classmap of type "byte"
         !------------------------------------------------------------
         write(6,*)' [Max. image size: 1870 x 1374]'
         write(6,*)' '

               write(6,20)
20             format(' Enter in biased residuals image filename [ch50]:',$)
               read(5,'(a50)') resfil

               write(6,30)
30             format(' Enter out classmap image name:',$)
               read(5,'(a50)') clsfil

               write(6,50)
50             format(' Enter min, max residuals GL thresholds:',$)
               read(5,*) gltmin,gltmax

               write(6,60)
```

```
60              format(' Do you wish prefilter dilation? [yes="1"]:',$)
                read(5,*) dilflg

c..................................................................
        write(6,*) ' Class threshold used is ',dgl

                deltime=Dtime(timearray)


                !Read biased color-residuals image:
                Call Irgb_load_isl(resfil,res,nbx,nbands,npixm,nlinm,
        1              npix,nlin,pixformi,0)

                write(6,150) resfil
150             format(' Input residuals file is ',a50)

                !-----------------------------------------------------
                !Compute class map:
                Call Buster_Class_Create(res,cls,nbx,nbands,
        1              npixm,nlinm,npix,nlin,gltmin,gltmax,dgl)

                !-----------------------------------------------------
                !Optionally, dilate classmap by one pixel:

        If (dilflg .eq. 1) then

                write(6,*)'      [Dilating class map]'

                Call Dilate_Class(cls,cls2,
        1                  npixm,nlinm,npix,nlin,dgl)

                Call Ioutput_isl(clsfil,cls2,npixm,nlinm,
        1                  npix,nlin,byte,iname)

                write(6,200) clsfil
200             format(' Out dilated class file is ',a50)

        Else    !write undilated classmap!
                Call Ioutput_isl(clsfil,cls,npixm,nlinm,
        1                  npix,nlin,byte,iname)

                write(6,300) clsfil
300             format(' Out undilated class file is ',a50)

        Endif

                deltime=Dtime(timearray)
                write(6,800) timearray(1),timearray(2)
800             format(/' Bust_Class:: user time (sec):',
        1              f8.2,'; system time (sec):',f8.2/)


        end
```

```
  ggg g    r rrr     aaaa      y    y
 g   gg   rr   r        a      y    y
 g    g   r          aaaaa     y    y
 g    g   r          a    a    y    y
 g   gg   r          a   aa    y   yy
  ggg g   r          aaaa a    yyy y
       g                            y
 g    g                       y     y
  gggg                         yyyy


                     b          11
   i                 b          1
                     b          1
   ii     r rrr     ggg g  b bbb      1      oooo      aaaa
    i     rr   r   g   gg  bb   b     1     o    o        a
    i     r       g    g   b    b     1     o    o     aaaaa
    i     r       g    g   b    b     1     o    o     a    a
    i     r       g   gg   bb   b     1     o    o     a   aa
   iii    r        ggg g   b bbb     111     oooo      aaaa a
                       g
                  g    g                    _____
                   gggg



                    t            i
                    t
  cccc     aaaa    ttttt   n nnn    ii     p ppp
 c    c       a      t     nn   n    i     pp   p
 c        aaaaa      t     n    n    i     p    p
 c        a    a     t     n    n    i     p    p
 c    c   a   aa     t  t  n    n    i     pp   p
  cccc    aaaa a      tt   n    n   iii    p ppp
                                           p
                                           p
                                           p
```

Job:  irgb load isl dugas.vf
Date: Wed Apr 21 14:43:48 1993

42

4

```
c Irgb_load_isl: Loads up to a 3-band image into a Int*2 array.

      Subroutine Irgb_load_isl(bname,b,nbx,nb,npixm,nlinm,npix,nlin,pixform,
    1       lunprt)
      Character*50 bname,infil
      Integer*2 b(nbx,npixm,nlinm),npix,nlin,ibuff(4096,3)
      integer imgin,gstatus,ostatus
      integer nbands,pixform,band,nbx,nb,npixm,nlinm
      integer rstatus,npx,nln
      integer opnimg,getdef,rdline
      integer arrtyp,lininc,jtype,pixdim

      Data pixdim/4096/
      include '/local/include/iopackagef'

      arrtyp=IDINT2

c...Open input image:
      imgin=0
      infil=bname
      ostatus=opnimg(imgin,infil,0,.false.)
      If (ostatus .ne. SYSNRM) then
            write(6,10) infil
   10       format(' In image ',a50,' not open-abort')
            stop
      Endif

      gstatus=getdef(imgin,npx,nln,nbands,pixform)
      If (gstatus .ne. SYSNRM) then
            write(6,20)
   20       format(' Gstatus error on input --abort')
            stop
      Endif
      If (nbands .gt. 3 .or. nbands .gt. nbx) then
            write(6,*)' Input no. bands too large--abort'
            stop
      Endif
      If (npx .gt. npixm .or. npx .gt. pixdim) then
         write(6,*)' "IRGB_load_isl":too many pixels--abort'
         stop
      Endif

      npix=npx
      nlin=nln
      nb=nbands
      write(6,45) npix,nlin,nbands,pixform
   45 format(2x,' "Irgb_load_isl":: Npix:',i5,'; Nlin:',i5,'; Nb:',i2,
    1    '; Type:',i2)
      If (lunprt .gt. 0) then
            write(lunprt,45) npix,nlin,nbands,pixform
      Endif

c...Read each line of input image:
      lininc=nlin/4
      jtype=lininc
      Do j=1,nlin
c     ... Read input lines & load 3-d array:
      line=j-1
      rstatus=rdline(imgin,line,-1,ibuff,pixdim,arrtyp)
                   ! "-1" for all bands!
      If (rstatus .ne. SYSNRM) then
         write(7,80) j
   80    format(' Error reading line -abort')
         stop
      Endif
      Do i=1,npix
```

43

```
                    Do band=1,nbands
                         b(band,i,j)=ibuff(i,band)
                    Enddo
               Enddo
               If (j .ge. jtype) then
                    write(6,200) j
200                 format(10x,' Line ',i4,' has been read')
                    jtype=jtype +lininc
               Endif
          Enddo               !End line loop!

     c...Close image:
               Call clsimg(imgin)
               return
               end
```

```
 ggg g    r rrr      aaaa      y    y
g    gg   rr   r        a      y    y
g     g   r          aaaaa     y    y
g     g   r          a    a    y    y
g    gg   r          a   aa    y   yy
 ggg g    r           aaaa a    yyy y
      g   .                          y
g     g                        y    y
 gggg                           yyyy

b
b                                    t
b                                    t
b bbb     u    u    ssss    ttttt     eeee     r rrr          cccc
bb    b   u    u    s    s    t      e    e    rr   r        c    c
b     b   u    u    ss        t      eeeeee    r             c
b     b   u    u      ss      t      e         r             c
bb    b   u   uu    s    s    t  t   e    e    r             c    c
b bbb      uuu u    ssss      tt     eeee      r              cccc
```

```
                    t                    i
                    t
 cccc     aaaa    ttttt    n nnn     ii    p ppp
c    c       a      t      nn   n     i    pp   p
c         aaaaa     t      n    n     i    p    p
c         a    a    t      n    n     i    p    p
c    c    a   aa    t  t    n    n     i    pp   p
 cccc     aaaa a     tt    n    n    iii    p ppp
                                            p
                                            p
                                            p
```

```
c Buster_Class_Create:Creates a dirt-candidate classmap from
c         the biased color residuals of a "BustSmooth"-type algorithm.
c         Classmap here is presently only bistate (dirt or nondirt), but
c         may be generalized to multiple-confidence states of presence
c         of defects.

        Subroutine Buster_Class_Create(res,cls,nbx,nbands,npixm,nlinm,
    1           npix,nlin,gltmin,gltmax,dgl)

        Integer*2 res(nbx,npixm,nlinm),cls(npixm,nlinm)
        Integer*2 npix,nlin

        Integer nbx,nbands,npixm,nlinm,gltmin,gltmax,dgl,glmin,glmax

        !-----------------------------------------------------------

        write(6,10)
10      format(' Bust_Class_Create: Gltmin Gltmax  Dgl')
        write(6,11) gltmin,gltmax,dgl
11      format(19x,2i7,i5/)

        Do j=1,nlin
                Do i=1,npix
                        glmin=res(1,i,j)
                        glmax=glmin
                        Do ib=2,nbands
                                glmin=Min0(glmin,res(ib,i,j))
                                glmax=Max0(glmax,res(ib,i,j))
                        Enddo
                        If (glmin .ge. gltmin .and. glmax .ge. gltmax) then
                                cls(i,j)=dgl
                        Else
                                cls(i,j)=0
                        Endif
                Enddo
        Enddo
        return
        end
```

```
    ggg g    r rrr      aaaa      y       y
    g   gg   rr   r        a      y      y
    g    g   r          aaaaa     y     y
    g    g   r        a       a   y    y
    g   gg   r        a     aa    y   yy
    ggg g    r          aaaa a     yyy y
        g                            y
    g    g                        y     y
    gggg                           yyyy


        d            ll
        d       i     l
        d             l                 t
      ddd d     ii    l      aaaa     ttttt      eeee              cccc
    d    dd     i     l         a       t       e    e           c      c
    d     d     i     l      aaaaa      t       eeeeee           c
    d     d     i     l     a     a     t       e                c
    d    dd     i     l     a    aa     t t     e    e           c      c
    ddd d      iii   lll     aaaa a      tt      eeee              cccc

                                                         _____



                     t                 i
                     t
     cccc     aaaa   ttttt    n nnn    ii     p ppp
    c    c       a     t      nn   n    i     pp   p
    c          aaaaa    t     n    n    i     p    p
    c        a     a    t     n    n    i     p    p
    c    c   a    aa    t t    n    n    i     pp   p
     cccc    aaaa a      tt    n    n   iii     p ppp
                                               p
                                               p
                                               p
```

Job:  dilate_class_dugas.vf
Date: Wed Apr 21 14:47:31 1993

```
c Dilate_Class: Dilates by 1 pixel a selected class in a
c       Byte class-map. Dilation kernel is a 3x3 square window.
c
c       ctar=class which is dilated; if current pixel is undilated then
c       old classvalue is copied as new classvalue.
c       Also dilates within 1-pixel border
c               region using part of 3x3 window still covering image.
c
c===========================================================================
        Subroutine Dilate_Class(clsi,clso,npixm,nlinm,npix,nlin,ctar)

        Integer*2 clsi(npixm,nlinm),clso(npixm,nlinm),npix,nlin
        Integer npixm,nlinm,ctar,im,ip,jm,jp
        !-----------------------------------------------------------

        write(6,10) ctar
10      format(/' Dilate_Class: target class is ',i5/)

        Do j=1,nlin
                jm=j-1
                jm=Max0(jm,1)
                jp=j+1
                jp=Min0(jp,nlin)
                Do i=1,npix
                        im=i-1
                        im=Max0(im,1)
                        ip=i+1
                        ip=Min0(ip,npix)
                        Do jj=jm,jp
                          Do ii=im,ip

                                        !If any neighbor=ctar, then
                                        !  set center=ctar as well:
                                                If (clsi(ii,jj) .eq. ctar) then
                                                        clso(i,j)=ctar
                                                        go to 100
                                                Endif
                                Enddo
                        Enddo
                        !No change, so copy to output:
                        clso(i,j)=clsi(i,j)
100                     continue
                Enddo
        Enddo

        return
        end
```

```
ggg g   r rrr     aaaa      y     y
g   gg  rr   r       a      y     y
g    g  r         aaaaa     y     y
g    g  r         a    a    y     y
g   gg  r         a   aa    y    yy
 ggg g  r          aaaa a    yyy y
      g                           y
g     g                     y     y
 gggg                        yyyy


 i                          t                          t
                            t                          t
 ii      oooo     u     u   ttttt    p ppp    u     u  ttttt
 i       o    o   u     u     t      pp   p   u     u    t
 i       o    o   u     u     t      p    p   u     u    t
 i       o    o   u     u     t      p    p   u     u    t
 i       o    o   u    uu     t   t  pp   p   u    uu    t   t
 iii     oooo     uuu  u       tt    p ppp    uuu  u      tt
                                     p
                                     p
                                     p


                   t                          i
                   t
cccc      aaaa    ttttt    n nnn     ii      p ppp
c    c       a      t      nn   n    i       pp   p
c         aaaaa     t      n    n    i        p    p
c         a    a    t      n    n    i        p    p
c    c    a   aa    t   t  n    n    i        pp   p
cccc      aaaa a     tt    n    n    iii      p ppp
                                             p
                                             p
                                             p


Job:  ioutput_isl_dugas.vf
Date: Wed Apr 21 14:48:35 1993
```

```
C       SUBROUTINE:  IOUTPUT_isl  (10-9-90)
C       PROGRAMMER: ELIZABETH J. DONALDSON/R. Gray
C       DATE:  9/20/90

C       OFILE  - INPUT - CHAR*50 - DESTINATION IMAGE
C       FOUT   - INPUT - Integer*2 - DESTINATION ARRAY
C       NPIXM  - INPUT - INTEGER*4 - MAX PIXEL DIMENSIONS FOR FIN
C       NLINM  - INPUT - INTEGER*4 - MAX LINE DIMENSION FOR FIN
C       NPIX   - OUTPUT - INTEGER*4 - NUMBER PIXELS IN INFILE
C       NLIM   - OUTPUT - INTEGER*4 - NUMBER LINES IN INFILE
C       PIXFORM - OUTPUT - INTEGER*4 - INFILE DATATYPE
C       INAME50  - OUTPUT - CHARACTER - (UNUSED)
C=================================================================
        Subroutine Ioutput_isl(ofile,fout,npixm,nlinm,npix,nlin,pixform,
     +  iname50)

        include '/local/include/iopackage.inc'

        character        ofile*50,iname50(50)
        Integer*2        fout(npixm,nlinm)
        integer*2        npix,nlin
        integer          putdef,opnimg,wrband
        integer*4        imgout,arrtyp,gstatus,pixform,npixm,nlinm
        integer*4        ostatus,pstatus,wstatus,npx,nln
        !----------------------------------------------------------
        write(6,5) npix,nlin,pixform
5       format(' Ioutput_isl: image header data: np = ',i4,' nl = ',i4,
     +  ' pixform = ',i3)

        arrtyp = IDINT2
        imgout=0

C       DEFINE CHARACTERISTICS OF OUTPUT IMAGE
                npx=npix
                nln=nlin
        pstatus =  putdef(imgout,npx,nln,1,pixform)
        if ( gstatus .ne. SYSNRM) go to 1000

C       OPEN OUTPUT IMAGE FOR RANDOM ACCESS
        ostatus = opnimg(imgout,ofile,1,.true.)
        if ( ostatus .ne. SYSNRM) then
                write(6,10)ofile
10              format(' Output image',a50,'not open.')
                write(6,*) ' Exiting-- ostatus= ',ostatus
                go to 1000
        endif

        if( pixform.eq.IDBYTE)then
           do  100 j = 1,nlin
                do   200 i = 1,npix
                   if (fout(i,j).lt.0)  fout(i,j) = 0
                   if (fout(i,j).gt.255) fout(i,j) = 255
200             continue
100        continue
        elseif( pixform.eq.IDINT1)then
           do 110 j = 1,nlin
                do 210 i = 1,npix
                   if (fout(i,j).lt.-128)  fout(i,j) = -128
                   if (fout(i,j).gt.127)  fout(i,j) = 127
210             continue
110        continue
        elseif( pixform.eq.IDINT2)then
           do 120 j = 1,nlin
                do 220 i = 1,npix
                   if ( fout(i,j).lt.-32768)  fout(i,j)=-32768
                   if ( fout(i,j).gt.32767)  fout(i,j)=32767
```

49

```
220           continue
120        continue
        elseif( pixform.eq.IDREA4)then
                GO TO 900
        else
                write(6,30)pixform
                format(' IOUTPUT_ISL: Pixform ',i3, ' not implemented.')
30      endif

900     wstatus = wrband(imgout,0,fout,npixm,nlinm,arrtyp)
        if ( rstatus .ne. SYSNRM) go to 1000

1000    continue

        call clsimg(imgout)
        return
        end
```

Appendix C--Docket 66,719

```
ggg g     r rrr      aaaa      y     y
g    gg   rr    r        a    y     y
g     g   r           aaaaa    y     y
g     g   r         a     a    y     y
g    gg   r         a    aa    y    yy
 ggg g    r          aaaa a    yyy y
      g                              y
g     g                        y     y
 gggg                           yyyy


b
b
b                              t
b bbb     u     u    ssss    ttttt    eeee    r rrr              eeee
bb    b   u     u    s    s    t     e     e   rr    r         e     e
b      b  u     u    ss        t     eeeeee    r               eeeeee
b      b  u     u       ss     t     e         r               e
bb    b   u    uu    s     s    t  t  e     e   r              e     e
b bbb      uuu u     ssss        tt    eeee    r                eeee


                    t                     i
                    t
cccc      aaaa    ttttt    n nnn    ii    p ppp
c    c        a     t      nn    n   i    pp   p
c         aaaaa     t      n     n   i    p     p
c        a     a    t      n     n   i    p     p
c    c   a    aa    t  t    n     n   i    pp   p
 cccc     aaaa a     tt     n     n   iii  p ppp
                                           p
                                           p
                                           p
```

```
:  Buster_Erode_am:(11-11-92) Uses dynamic memory allocation on the Sun.      1
:        Calls dedirt5x5_byte2_nopad; no 2-pixel "dead zone"
:        around image; all pixels in image are potentially cleaned.

:        Intended for use on a Sun workstation running SunOS (e.g. a
:        Sparcstation 10).


:        5x5 erosion window is currently hard-wired in. Minimum clean fraction
:        of erosion window is nominally .24.

:        Cleans RGB image by grayscale erosion
:        using an external 2-state class map.

:        Calls:
:                Irgb_load_isl
:                        (Includes image-format-specific calls)
:                Binput_Isl
:                        (includes image-format-specific calls)
:                Dedirt5x5_byte2_nopad
:                Irgb_write_isl
:                        (includes image-format-specific calls).

:        Image arrays:
:                iml     :Original (dirty) 3-band image  (input)
:                cls     :1-band classmap (input)
:                im2     :Cleaned 3-band image (output)

:        Warning: Once erosion iteration begins, iml & im2 contents
:        are *partially*-cleaned image; original is not retained.

:        Removes by interpolation all pixels whose class-map GL is .ge.
:        a threshold value. Works on a multiband image (up to 3 bands).
:        Assumes iterative in/of recursive filtering.
:        Uses adjustable variable-input window size, allows only filtering
:                a rectangular piece of the image.
:        Image & class map are assumed Integer*2 values (i.e., not real).
:==============================================================================

        Program Buster_Erode_Am

        Pointer (piml,iml),(pim2,im2),(pcls,cls),(pcls2,cls2)

        Integer*2 iml(1,1,1),im2(1,1,1)
        Byte cls(1,1),cls2(1,1)

        Integer*2 iml(3,1828,1332),im2(3,1828,1332)
        Byte cls(1828,1332),cls2(1828,1332)

        integer*2 npix,nlin

        Integer npixm,nlinm,band,nbands,nbc,nbx,cnt
        integer pixformi,pixformo,pixformc
        integer iml_bytes,im2_bytes,cls_bytes,cls2_bytes,tot_bytes
        integer itmax,it,cnttot
        integer inflg
        integer dgl,byte
        Integer*4 iystart,iyend

        real*4 deltime,Dtime,timearray(2),fmin

        character*50 infil,outfil,clsfil

        data itmax/40/          !Max. no. of erosion iterations!
        data dgl/255/           !Defines "dirt" class!
        data diagflg/0/
```

```
        data byte/3/                                               2
c       data nbx,npixm,nlinm/3,1828,1332/
        !-------------------------------------------------------
        write(6,*)' ---------------------------------------------'
        write(6,*)' Buster_Erode_Am    : Dynamically allocated memory'

            write(6,10)
10          format( /' Enter in "dirty" file name[ch50]:',$)
            read(5,'(a50)')infil

            Call Read_hdr_isl(infil,npix,nlin,nbands,pixformi)
            write(6,15)npix,nlin,pixformi,nbands
15          format(' npix=',i4,'; nlin=',i4,'; type=',i2,'; bands=',i2)

                npixm=npix
                nlinm=nlin
                nbx=nbands

                im1_bytes=2*nbx*npixm*nlinm
                im2_bytes=im1_bytes
                cls_bytes=npixm*nlinm
                cls2_bytes=cls_bytes
                tot_bytes=im1_bytes +im2_bytes +cls_bytes +cls2_bytes
        write(6,*)' Memory allocation requested (bytes): ',tot_bytes


            write(6,20)
20          format(' Enter in class filename:',$)
            read(5,'(a50)') clsfil

            write(6,30)
30          format( ' Enter out "cleaned" filename[ch50]:',$)
            read(5,'(a50)')outfil

            write(6,40)
40          format(' Enter reqd cleaning fraction "fmin" [Real]:',$)
            read(5,*) fmin
            If (fmin .le. 0. .or. fmin .gt. 0.5) then
                    write(6,*)' Fmin out of range--abort'
                    Call Exit(1)
            Endif

c........................................................................
        write(6,*) ' Class threshold used is ',dgl

        !Read color image to be filtered:

        write(6,150)infil
150     format(/' Input (dirty) file is ',a50)

                deltime=Dtime(timearray)

        pim1=malloc(im1_bytes)
        If (pim1 .eq. 0) then
                write(6,*)' Malloc for "im1" failed--abort'
                Call Exit(1)
        Endif

        Call Irgb_load_isl(infil,im1,nbx,nbands,npixm,nlinm,
1            npix,nlin,pixformi,0)

                pixformo=pixformi  !Out datatype set equal to in type!

        write(6,160) clsfil
160     format(' Input class file is ',a50/)
```

```
        pcls=malloc(cls_bytes)                                              3
        If (pcls .eq. 0) then
                write(6,*)' Malloc for "cls" failed--abort'
                Call Exit(1)
        Endif

        Call Binput_isl(clsfil,cls,npixm,nlinm,npix,nlin,pixformc,
     1          1,nBc)

        pim2=malloc(im2_bytes)
        If (pim2 .eq. 0) then
                write(6,*)' Malloc for "im2" failed--abort'
                Call Exit(1)
        Endif

        pcls2=malloc(cls2_bytes)
        If (pcls2 .eq. 0) then
                write(6,*)' Malloc for "cls2" failed--abort'
                Call Exit(1)
        Endif

        !-----------------------------------------------------------------
                inflg=1 !Start by assuming "cls" is input class map!
        !Clean by erosion iteratively until no more pixels are replaced:
        write(6,*)' [Beginning cleaning]'
                cnttot=0

                iystart=1          !Required initializations
                iyend=nlin

        Do it=1,itmax
                cnt=0
          If (inflg .eq. 1) then
                Call Dedirt5x5_byte2_nopad(im1,cls,im2,
     1                  cls2,npixm,nlinm,npix,nlin,nbx,nbands,
     2                  dgl,cnt,fmin)
                Call Dedirt5x5_byte2_nopad2(im1,cls,im2,
     1                  cls2,npixm,nlinm,npix,nlin,nbx,nbands,
     2                  dgl,cnt,fmin,iystart,iyend)
                inflg=2

          Else if (inflg .eq. 2) then
                Call Dedirt5x5_byte2_nopad(im2,cls2,im1,
     1                  cls,npixm,nlinm,npix,nlin,nbx,nbands,
     2                  dgl,cnt,fmin)
                Call Dedirt5x5_byte2_nopad2(im2,cls2,im1,
     1                  cls,npixm,nlinm,npix,nlin,nbx,nbands,
     2                  dgl,cnt,fmin,iystart,iyend)
                inflg=1
          Else
                write(6,*)' Inflg out of range--abort'
                Call Exit(1)
          Endif

                cnttot=cnttot +cnt
        write(6,200) it,cnt
00      format(' After it=',i3,' # pels cleaned = ',i6)

        If (cnt .eq. 0) then   !No more dirt-class pels to be cleaned!
                go to 500        !Dreaded "go-to" statement!
        Endif

        Enddo
        write(6,*)' Warning-Cleaning loop exhausted after it=',itmax
        write(6,*)' Aborting due to loop exhaustion'
        Call Exit(1)
```

53

4

```
500     continue

        write(6,550)it
550     format(' Cleaning ended after iteration=',i3)
        write(6,552) cnttot
552     format(' Total # of points filtered=',i6)

        !Release classmap memory:
        Call Free(pcls)
        Call Free(pcls2)

        If (inflg .eq. 1) then
                Call Free(pim2) !release unneeded image memory
                call Irgb_write_isl(outfil,im1,nbx,nbands,npixm,nlinm,
     1          npix,nlin,pixformo,0)
        Else
                Call Free(pim1) !released unneeded image memory
                call Irgb_write_isl(outfil,im2,nbx,nbands,npixm,nlinm,
     1          npix,nlin,pixformo,0)
        Endif

                deltime=Dtime(timearray)
        write(6,800) timearray(1),timearray(2)
800     format(/' Buster_Erode_Am:: user time (sec):',
     1          f8.2,'; system time (sec):',f8.2/)

        write(6,850) outfil
850     format(' Cleaned output image file is ',a50)

        end
```

54

```
ggg g   r rrr     aaaa     y     y
g  gg   rr   r       a     y     y
g   g   r        aaaaa     y     y
g   g   r        a    a    y     y
g  gg   r        a   aa    y    yy
ggg g   r        aaaa a   yyy y  y
   g                             y
g     g                   y      y
 gggg                      yyyy
```

```
b
b               i                       t               i
b                                       t
b bbb          ii       n nnn   p ppp   u    u  ttttt          ii
bb   b          i       nn   n  pp   p  u    u    t             i
b     b         i       n    n  p    p  u    u    t             i
b     b         i       n    n  p    p  u    u    t             i
bb   b          i       n    n  pp   p  u   uu    t   t         i
b bbb          iii      n    n  p ppp    uuu u     tt          iii
                                p
                                p
                                p
```

```
                   t               i
                   t
cccc   aaaa     ttttt   n nnn   ii   p ppp
c   c      a       t    nn   n   i   pp    p
c        aaaaa     t    n    n   i   p     p
c        a    a    t    n    n   i   p     p
c   c    a   aa    t  t  n    n   i   pp    p
cccc     aaaa a     tt   n    n   iii p ppp
                                     p
                                     p
                                     p
```

Job:  binput_is1.vf
Date: Wed Apr 21 15:08:40 1993

```
c Binput_isl:(10-7-92) Reads one band of an isl-format image into
c       a single byte-type array. Input is clipped to range 0-255.          6
c============================================================================
        Subroutine Binput_isl(infil,im,npixm,nlinm,npix,nlin,pixform,
     1          band,nbands)

        Character*50 infil
        Character cval

        Byte im(npixm,nlinm),bval

        Integer*2 ibuff(4096),npix,nlin

        integer imgin,ostatus,gstatus
        integer opnimg,getdef,rdline
        integer nbands,pixform,band,iband,ival
        integer rstatus,npx,nln,npixm,nlinm
        integer arrtyp,lininc,jtype

        Equivalence (cval,bval)
        !--------------------------------------------------------------
c       include '/local/include/iopackagef'
        !Above comment-out must be removed after f77cvt conversion!!!!

        arrtyp=IDINT2

c...Open input image:
                imgin=0
                ostatus=opnimg(imgin,infil,0,.false.)
                If (ostatus .ne. SYSNRM) then
                        write(6,10) infil
 10                     format(' In image ',a50,' not open-abort')
                        Call Exit(1)
                Endif

                gstatus=getdef(imgin,npx,nln,nbands,pixform)
                If (gstatus .ne. SYSNRM) then
                        write(6,20)
 20                     format(' Gstatus error on input --abort')
                        Call Exit(1)
                Endif

                npix=npx
                nlin=nln
        write(6,45)
 45     format(/' "Binput_isl": Npix Nlin  Type  Nbands Band')
                write(6,50) npix,nlin,pixform,nbands,band
 50             format(14x,2i5,i6,i8,i5)

c...Read each line of input image:
                lininc=nlin/4
                jtype=lininc
                rstatus=0

        Do j=1,nlin
c               ... Read input lines & calc. sum:
                line=j-1
                iband=band -1
                rstatus=rdline(imgin,line,iband,ibuff,4096,arrtyp)
                If (rstatus .ne. SYSNRM) then
                        write(7,80) j
 80                     format(' Error reading line -abort')
                        Call Exit(1)
                Endif

                Do i=1,npix
```

```
                                  ival=Max0(ibuff(i),0)                        7
                                  ival=Min0(ival,255)
                                  cval=Char(ival)
                                  im(i,j)=bval
                        Enddo
            Enddo                 !End line loop!
c...Close images
            Call clsimg(imgin)
            return
            end
```

Job:  dedirt5x5_byte2_nopad_dugas.vf
Date: Wed Apr 21 15:04:51 1993

```
c Dedirt5x5_byte2_nopad:                                            9

c         Eliminates "dead zone"
c         of 2 pixels around image edges (i.e. cleaning now takes place at all
c         pixels of the image). Only need one clean pixel in a 5x5 neighborhood t
c         clean a dirty border pixel (i.e. nmin_edge=1).

c         Output non-dirt or cleaned classes in classmap have a value of "0".
c         Note that within one call of Dedirt, cleaned GLs are *not* used
c         to clean their neighbors; this will, however, occur in
c         subsequent iterations (further calls to dedirt).

c         Ad hoc "dirt" remover. Assumes that dirt is detectable as
c         a simple grey-level threshold in the input classmap.
c         Filters all pixels *above* a certain
c         threshold grey level ("gth").

c         Note that a 1-pixel dilation of the classmap is suggested prior
c         to first using this subroutine, to avoid propagation of dirt
c         "ghosts".
c
c         Image arrays: (Max dims:npixm,nlinm; Actual dims: npix,nlin)
c                  im1:      Input (dirty) 3-band image
c                  cls:      Input dirt 1-band classmap
c                  cls2:     Output dirt 1-band classmap
c                  im2:      Output (cleaned) 3-band image
c
c         Input: np,nl     :Size of filter window.
c                  dgl       :Threshold classmap GL value req'd for cleaning.
c                  fmin      :Fraction of window needed to be "clean" to be filtered
c                            (1=<nmin<np*(nl-1)/2 ).

c         Output:cnt        :No. of pixels which were filtered.
C===================================================================================
          Subroutine Dedirt5x5_Byte2_Nopad(im1,cls,im2,cls2,npixm,nlinm,npix,nlin
     1           dgl,cnt,fmin)

          Integer*2 im1(nbx,npixm,nlinm),im2(nbx,npixm,nlinm)

          Integer*2 npix,nlin
          Integer npixm,nlinm,np,nl,np2,nl2,cnt,dcnt,i0,ix,j0,jx,dgl
          Integer nbx,nb,num_neigh,nmin,delx,dely
          Integer nmin_edge,nmin_cent

          Byte cls(npixm,nlinm),cls2(npixm,nlinm),bdgl

          Real*4 sum(3),wtsum,wt(3,3),fmin
          !fmin=.24 implies nmin=6 for 5x5 window.

          Character cdgl

          Data np,nl/5,5/          !Erosion window size!
          Data wt(1,1),wt(2,1),wt(3,1)/1.,1.,0.5/              !Wts specific t:
          Data wt(1,2),wt(2,2),wt(3,2)/1.,0.707,0.4472/
          Data wt(1,3),wt(2,3),wt(3,3)/0.5,0.4472,0.3536/
          Data nmin_edge/0/

          Equivalence (cdgl,bdgl)
          !---------------------------------------------------------------

                  cnt=0
                  dcnt=0
                  nl2=nl/2
                  np2=np/2
                  nmin_cent=Nint(fmin*np*nl)
```

```
            cdgl=Char(dgl)                                              10
      write(6,10)
10    format(' Dedirt5x5_Byte2_Nopad: Npix Nlin  Np  Nl    Fmin Nmin   Dgl')
      write(6,11) npix,nlin,np,nl,fmin,nmin_cent,dgl
11    format(23x,2i5,2i4,f8.3,i5,i6/)


      !Slide window across image:
      Do j=1,nlin
         Do i=1,npix

                 !i,j are coordinates of center of window!

                 !Test local value of classmap:
                 If (cls(i,j) .eq. bdgl) then  !Filter the point
                        dcnt=dcnt +1
                        j0=j-nl2
                        jx=j+nl2
                        j0=Max0(j0,1)
                        jx=Min0(jx,nlin)
                        i0=i-np2
                        ix=i+np2
                        i0=Max0(i0,1)
                        ix=Min0(ix,npix)
                            !i0,ix,j0,jx are coordinates of extrema of
                            !  current window
                        Do ib=1,nb
                             sum(ib)=0.
                        Enddo
                        wtsum=0.
                        num_neigh=0

                        !Calc. over local "dirty" window:
                        Do j2=j0,jx

                          Do i2=i0,ix

                             !If neighbor is *not* dirt, then:
                             If (cls(i2,j2) .ne. bdgl) then
                                 !Calc. a distance-weight for that GL:
                                 !dis=(Float(i -i2))**2 +(Float(j -j2))**2
                                 !dis=Sqrt(dis)
                                 !wt=1./dis
                                 !wtsum=wtsum +wt

                                    delx=Int(Abs(i -i2) +1.)
                                    dely=Int(Abs(j -j2) +1.)
                                    wtsum=wtsum +wt(delx,dely)

                                 Do ib=1,nb
                                     sum(ib)=sum(ib) +wt(delx,dely)*iml(ib,i
                                 Enddo
                                 !Count no. of non-dirt window pixels:
                                 num_neigh=num_neigh +1
                             Endif
                          Enddo
                        Enddo

                        !Calc. local value of "nmin":
                        If (j .le. nl2 .or. j .ge. (nlin -nl2 +1)) then
                             nmin=nmin_edge  !Top or bottom border!
                        Else if (i .le. np2 .or. i .ge. (npix -np2 +1)) then
                             nmin=nmin_edge  !Left or right border!
                        Else
                             nmin=nmin_cent  !Not in a border region!
```

```
                                     adif                                      11
                        !If have min. no. of non-dirt neighbors, then
                        !  replace dirty GL w/ wted ave of nondirty GLs:
                        If (num_neigh .gt. nmin) then  !Replace the center GL:
                            Do ib=1,nb
                                im2(ib,i,j)=Nint(sum(ib)/wtsum)
                            Enddo
                            cls2(i,j)=0  !Don't filter point again!
                            cnt=cnt +1

                        Else    !Not enough non-dirt pixels within window!
                            !Keep the old (dirty) GL for now:
                            Do ib=1,nb
                                im2(ib,i,j)=im1(ib,i,j)
                            Enddo
                            cls2(i,j)=cls(i,j)
                        Endif

                   Else             !Point is non-dirt, no interpolation!
                        !Copy input GLs to output:
                        Do ib=1,nb
                                im2(ib,i,j)=im1(ib,i,j)
                        Enddo
                        cls2(i,j)=cls(i,j)
               Endif
        Enddo         !End "i" loop
     Enddo    !End "j" loop

     write(6,500) dcnt,cnt
500  format(' No. of dirt pels:',i6,'; no. of cleaned pels:',i6)

     If (dcnt .gt. 0 .and. cnt .eq. 0) then
             write(6,*)' Warning--stable w/ some dirt remaining!!!'
             write(6,*)' [aborting]'
             Call Exit(1)
     Endif
     return
     end
```

```
ggg g   r rrr     aaaa      y     y                               i
g   gg   rr   r        a    y     y
g    g   r        aaaaa     y     y
g    g   r      a     a     y     y
g   gg   r      a    aa     y    yy
 ggg g   r        aaaa a     yyy y
     g                            y
g    g                       y    y
 gggg                         yyyy

                          b
   i                      b                                       i
                          b
   ii    r rrr     ggg g  b bbb         w     w   r rrr    ii
    i    rr   r    g   gg  bb   b       w  w  w   rr   r    i
    i    r        g    g   b    b       w  w  w   r        i
    i    r        g    g   b    b       w  w  w   r        i
    i    r        g   gg   bb   b       w  w  w   r        i
   iii   r        ggg g    b bbb         ww ww    r        iii
                      g
                 g    g
                  gggg


                          t             i
                          t
  cccc    aaaa    ttttt    n nnn    ii    p ppp
 c    c       a     t      nn   n    i    pp   p
 c        aaaaa     t      n    n    i    p    p
 c        a    a    t      n    n    i    p    p
 c    c   a   aa    t t     n    n   i    pp   p
  cccc    aaaa a    tt     n    n    iii   p ppp
                                          p
                                          p
                                          p
```

Job:  irgb_write_isl_dugas.vf
Date: Wed Apr 21 15:09:43 1993

c Irgb_write_isl: Writes a 3-band image from a Int*2 array.

```
        Subroutine Irgb_write_isl(bname,b,nbx,nb,npixm,nlinm,npix,nlin,
     1           pixform,lunprt)
        Character*50 bname,outfil
        Integer*2 b(nbx,npixm,nlinm),npix,nlin,ibuff(4096,3)
        integer imgout,pstatus,ostatus
        integer nbands,pixform,nbx,nb,npixm,nlinm
        integer wstatus,npx,nln,ival
        integer arrtyp,lininc,jtype,pixdim,lunprt
        integer putdef,opnimg,wrline

        Data pixdim/4096/
        include '/local/include/iopackagef'

            arrtyp=IDINT2
            nbands=nb

        write(6,45) npix,nlin,nbands,pixform
     45 format(2x,' "Irgb_write_isl":: Npix:',i5,'; Nlin:',i5,'; Nb:',i2,
     1       '; Type:',i2)
        If (lunprt .gt. 0) then
            write(lunprt,45) npix,nlin,nbands,pixform
        Endif

c...Open output image:
            imgout=0
            npx=npix
            nln=nlin
            outfil=bname
        pstatus=putdef(imgout,npx,nln,nbands,pixform)
        If (pstatus .ne. SYSNRM) then
            write(6,*)' Pstatus error for output--abort'
            stop
        Endif
        ostatus=opnimg(imgout,outfil,1,.false.) !"1" for write-only!
        If (ostatus .ne. SYSNRM) then
            write(6,*)' Output image not open--abort'
            stop
        Endif

c...Write each line of output image:
            lininc=nlin/5
            jtype=lininc
        Do j=1,nlin
c           ... load 2-d array & write lines:
          Do i=1,npix
            Do ib=1,nbands
                ibuff(i,ib)=b(ib,i,j)
            Enddo
          Enddo
        If (pixform .eq. IDBYTE) then
            Do ib=1,nbands
              Do i=1,npix
                ival=Max0(ibuff(i,ib),0)
                ibuff(i,ib)=Min0(ival,255)
              Enddo
            Enddo
        Else if (pixform .eq. IDINT1) then
            Do ib=1,nbands
              Do i=1,npix
                ival=Max0(ibuff(i,ib),-128)
                ibuff(i,ib)=Min0(ival,127)
              Enddo
            Enddo
```

62

14

```
            Else if (pixrorm .eq. IDINT2) then
                continue
            Else if (pixform .eq. IDREA4) then
                continue
            Else
                write(6,100) pixform
100             format('  Pixformo=',i3,' not implemented--stop')
                stop
            Endif

            line=j -1
            wstatus=wrline(imgout,line,-1,ibuff,pixdim,arrtyp)
            If (wstatus .ne. SYSNRM) then
                write(6,*)' Error in wstatus--abort'
                stop
            Endif

c                       If (j .ge. jtype) then
c                           write(6,200) j
c 200                       format(10x,' Line ',i4,' has been written')
c                           jtype=jtype +lininc
c                       Endif
            Enddo          !End line loop!

c.  Close image:
            Call clsimg(imgout)
            return
            end
```

## Claims

1. A method for the detection and removal of defects in digital images comprising the steps of:

   a) preprocessing a digital image represented by pixel values to form a feature image in which defect pixels have large local contrast from their neighboring non-defect pixels;

   b) testing the value of each feature image pixel value to determine if the value is within a range of pixel values expected of defects;

   c) edge-preserving spatial filtering of each of the feature image pixel values that are within the range of expected defects;

   d) forming a residual value for each pixel as a function of the difference between the corresponding feature image pixel value and the filtered value of step c);

   e) testing each residual value of step d) to determine if the residual value is within a range of residuals values expected of defects;

   f) forming a map in which each pixel that is within the range of expected defects according to steps b) and e) is marked as a defect; and

   g) correcting the digital image using the map created in step f).

2. A method for the detection and removal of defects in digital images comprising the steps of:

   a) preprocessing a digital image represented by pixel values to form a feature image in which defect pixels have large local contrast from their neighboring non-defect pixels;

   b) testing the value of each feature image pixel value to determine if the value is within a range of pixel values expected of defects;

   c) edge-preserving spatial filtering of each of the feature image pixel values that are within the range of expected defects;

   d) forming a residuals image which consists of the difference between the feature image pixel values and the filtered values of step c);

   e) testing each pixel value of the residuals image of step d) to determine if the residual value is within a range of residuals values expected of defects;

   f) forming a map in which each pixel that is within the range of expected defects according to steps b) and e) is marked as a defect; and

   g) correcting the digital image using the map created in step f).

3. A method for the detection and removal of defects in digital images comprising the steps of:

EP 0 624 848 A2

a) preprocessing a digital image represented by pixel values to form a feature image in which defect pixels have large local contrast from their neighboring non-defect pixels;

b) testing the value of each feature image pixel value to determine if the value is within a range of pixel values expected of defects;

c) edge-preserving spatial filtering of each of the feature image pixel values;

d) forming a residual value for each pixel as a function of the difference between the corresponding feature image pixel value and the filtered value of step c);

e) testing each residual value of step d) to determine if the residual value is within a range of residuals values expected of defects;

f) forming a map in which each pixel that is within the range of expected defects according to steps b) and e) is marked as a defect; and

g) correcting the digital image using the map created in step f).

4. The method according to Claim 1, 2, or 3, wherein the map formed in step f) is conditioned by morphological dilation of the pixels marked as defect.

5. The method according to Claim 1, 2, or 3, wherein the map formed in step f) is conditioned by morphological erosion of the pixels not marked as defect.

6. The method according to Claim 1, 2, or 3, wherein the map of step f) is formed with each pixel marked according to the magnitude of its values according to steps b) and e).

7. A method for the detection and removal of defects in digital images represented by multiple spatial resolutions ordered from lower to higher, comprising the steps of:

a) preprocessing a lower spatial resolution representation of the digital image by forming a feature image in which defect pixels have large local contrast from their neighboring non-defect pixels;

b) testing the value of each feature image pixel value to determine if the value is within a range of pixel values expected of defects;

c) edge-preserving spatial filtering of each of the feature image pixel values that are within the range of expected defects;

d) forming a residual value for each pixel as a function of the difference between the corresponding feature image pixel value and the filtered value of step c);

e) testing each residual value of step d) to determine if the residual value is within a range of residuals values expected of defects;

f) forming a map in which each pixel that is within the range of expected defects according to steps b) and e) is marked as a defect;

g) correcting the lower resolution representation of the digital image using the map created in step f); and

h) correcting the higher resolution representations of the digital image using the map created in step f).

8. An apparatus for the detection and removal of defects in digital images comprising:

means for preprocessing a digital image represented by pixel values to form a feature image in which defect pixels have large local contrast from their neighboring non-defect pixels;

first means for testing the value of each feature image pixel value to determine if the value is within a range of pixel values expected of defects;

filter means for edge-preserving spatial filtering of each of the feature image pixel values;

means for forming a residual value for each pixel as a function of the difference between the corresponding feature image pixel value and the filtered value from said filter means;

second means for testing each residual value from said forming means to determine if the residual value is within a range of residuals values expected of defects;

means for forming a map in which each pixel that is within the range of expected defects according to said first and said second testing means is marked as a defect; and

means for correcting the digital image as a function of the formed map.

9. An apparatus for the detection and removal of defects in digital images represented by multiple spatial resolutions ordered from lower to higher, comprising:

means for preprocessing a lower spatial resolution representation of the digital image by forming a

EP 0 624 848 A2

feature image in which defect pixels have large local contrast from their neighboring non-defect pixels;

first testing means for testing the value of each feature image pixel value to determine if the value is within a range of pixel values expected of defects;

filter means for edge-preserving spatial filtering of each of the feature image pixel values that are within the range of expected defects;

residual means for forming a residual value for each pixel as a function of the difference between the corresponding feature image pixel value and the filtered value of said filter means;

second testing means for testing each residual value from said residual means to determine if the residual value is within a range of residuals values expected of defects;

mapping means for forming a map in which each pixel that is within the range of expected defects from said first and said second testing means is marked as a defect;

means for correcting the lower resolution representation of the digital image using the map created by said mapping means; and

means for correcting the higher resolution representations of the digital image using the map created by said mapping means.

10. A method for the detection and removal of local defects in digital images comprising the steps of:
a) generating a feature image from an original digital image;
b) creating an EPS-residuals image using the feature image;
c) testing and mapping image pixels based upon the values of the EPS residuals image and the pixel values of the feature image;
d) modifying the mapped image as a function of mapped values of neighboring pixels;
e) cleaning of defect pixels by an EPS-substitution process or by a greyscale erosion process; and
f) cleaning of defect pixels in different spatial resolution representations of the original image if different spatial resolution representations are present.

11. A method for the detection and removal of defects in digital images comprising the steps of:
a) preprocessing a digital image to form a feature image; and
b) testing each feature image to determine if a value is within a range of pixel values expected of defects;
c) edge-preserving spatial filtering of each of the feature image pixel values that are within the range of expected defects.

FIG. 1

ORIGINAL IMAGE (MULTIBAND) — 100

PREPROCESSING — 110

FEATURE IMAGE — 120

BAND BRIGHTNESS TEST — 130

TEST FAIL

TEST PASS

EPS FILTER — 140

SMOOTHED IMAGE — 142

+ − (+) — 145

RESIDUALS IMAGE — 148

RESIDUALS TEST — 150

CLASSMAP — 160

CONDITIONING BLOCK — 170

CONDITIONED CLASSMAP — 175

CLEANING BLOCK — 180

CLEANED IMAGE — 190

FIG. 2

67

FIG. 3

FIG. 4

FIG. 5

FIG. 6

FIG. 7

*FIG. 8*

FIG. 9